# EUROPEAN PATENT APPLICATION

(11) **EP 4 664 429 A1**
(43) Date of publication of application: **17.12.2025**
(21) Application number: 24753382.1
(22) Date of filing: 07.02.2024
(51) Int. Cl.: G06V 40/50, G06V 40/12

(54) **BIOLOGICAL DATA CONVERSION DEVICE, BIOLOGICAL DATA CONVERSION METHOD, AND BIOLOGICAL DATA CONVERSION SYSTEM**

(30) Priority: 09.02.2023 JP 2023018583
(71) Applicant: Panasonic Intellectual Property Management Co., Ltd., Kadoma-shi, Osaka 571-0057 (JP)
(72) Inventor: NAKAMURA, Hideyuki, Osaka 571-0057 (JP); TANAHASHI, Satoru, Osaka 571-0057 (JP)
(74) Representative: Eisenführ Speiser
(86) International application number: PCT/JP2024/004087
(87) International publication number: WO 2024/166939

(57) **Abstract**

This biological data conversion device comprises: an acquisition unit that acquires at least one item of first biological data; and a control unit that converts the first biological data to second biological data, which is different from the first biological data, and outputs the second biological data.

## Description

### TECHNICAL FIELD

The present disclosure relates to a biometric data conversion device, a biometric data conversion method, and a biometric data conversion system.

### BACKGROUND ART

Patent Literature 1 discloses a fingerprint processing device that detects a three-dimensional shape of a fingerprint by a 3D scanner, acquires a first fingerprint image representing the fingerprint in a three-dimensional coordinate space, and generates a second fingerprint image representing the fingerprint in a two-dimensional coordinate plane and showing the fingerprint with desired image characteristics. The image characteristics of the fingerprint include brightness, saturation, luminance, resolution, and gradation of each portion of the fingerprint (for example, each pixel constituting the fingerprint), the number of pixels representing the fingerprint (so-called the number of pixels), characteristics related to noise superimposed on the pixels representing the fingerprint, characteristics related to a position of the fingerprint in the image, and the like.

### CITATION LIST

### PATENT LITERATURE

Patent Literature 1: JP2022-93819A

### SUMMARY OF INVENTION

### TECHNICAL PROBLEM

In an acquisition method for biometric information (for example, a fingerprint, a vein, or a palm print) used for biometric authentication, there are a method for acquiring biometric information from a biometric site (for example, a finger or a palm) of a user in a non-contact state and a method for acquiring biometric information from a biometric site of a user in a contact state. However, the biometric information acquired in the contact state may have a shape different from that of the biometric information acquired in the non-contact state because a pressing force is applied to the biometric site when a finger is placed on (brought into contact with) the placement surface, and thus there is a possibility that the user authentication accuracy decreases.

When an acquisition device of the biometric information used when the biometric information is registered and an acquisition device of the biometric information used when the biometric information is authenticated are different from each other, since the acquisition methods for the biometric information of the respective acquisition devices are different from each other, there is a possibility that the user authentication accuracy decreases.

The present disclosure has been made in view of the above-described circumstances of the related art, and an object thereof is to provide a biometric data conversion device, a biometric data conversion method, and a biometric data conversion system that convert biometric information acquired by any acquisition method into biometric information that is biometrically authenticatable.

### SOLUTION TO PROBLEM

The present disclosure provides a biometric data conversion device including an acquisition unit configured to acquire at least one piece of first biometric data, and a control unit configured to convert the first biometric data into second biometric data different from the first biometric data and output the second biometric data.

The present disclosure provides a biometric data conversion method performed by a biometric data conversion device configured to communicate with at least one biometric data acquisition device configured to acquire first biometric data, and the biometric data conversion method includes acquiring the first biometric data, and converting the first biometric data into second biometric data different from the first biometric data, and outputting the second biometric data.

The present disclosure provides a biometric data conversion system including at least one biometric data acquisition device configured to acquire first biometric data, and a server configured to communicate with the biometric data acquisition device, in which the biometric data acquisition device acquires the first biometric data and transmits the first biometric data to the server, and the server converts the first biometric data into second biometric data different from the first biometric data and outputs the second biometric data.

### ADVANTAGEOUS EFFECTS OF INVENTION

According to the present disclosure, it is possible to convert biometric information acquired by any acquisition method into biometric information that is biometrically authenticatable.

### BRIEF DESCRIPTION OF DRAWINGS

[FIG. 1] FIG. 1 is a diagram illustrating a first use case example of a fingerprint authentication system according to Embodiment 1.
[FIG. 2] FIG. 2 is a diagram illustrating a second use case example of the fingerprint authentication system according to Embodiment 1.
[FIG. 3] FIG. 3 is a diagram illustrating a third use case example of the fingerprint authentication system according to Embodiment 1.
[FIG. 4] FIG. 4 is a diagram illustrating an internal configuration example of a fingerprint authentication system according to the first to third use case examples of Embodiment 1.
[FIG. 5] FIG. 5 is a sequence diagram illustrating an operation procedure example of the fingerprint authentication system according to the first to third use case examples of Embodiment 1.
[FIG. 6] FIG. 6 is a diagram illustrating a fourth use case example of a fingerprint authentication system according to Embodiment 2.
[FIG. 7] FIG. 7 is a diagram illustrating an internal configuration example of a terminal device, a fingerprint acquisition device, and a server in the fourth use case example of Embodiment 2.
[FIG. 8] FIG. 8 is a sequence diagram illustrating an operation procedure example of the fingerprint authentication system according to the fourth use case example of Embodiment 2.
[FIG. 9] FIG. 9 is a diagram illustrating a fifth use case example of a fingerprint authentication system according to Embodiment 3.
[FIG. 10] FIG. 10 is a diagram illustrating an internal configuration example of the fingerprint authentication system in the fifth use case example of Embodiment 3.
[FIG. 11] FIG. 11 is a sequence diagram illustrating an operation procedure example of the fingerprint authentication system according to the fifth use case example of Embodiment 3.
[FIG. 12] FIG. 12 is a diagram illustrating a sixth use case example of the fingerprint authentication system according to Embodiment 3.
[FIG. 13] FIG. 13 is a diagram illustrating an internal configuration example of the fingerprint authentication system in the sixth use case example of Embodiment 3.
[FIG. 14] FIG. 14 is a sequence diagram illustrating an operation procedure example of the fingerprint authentication system according to the sixth use case example of Embodiment 3.
[FIG. 15] FIG. 15 is a diagram illustrating a seventh use case example of the fingerprint authentication system according to Embodiment 3.
[FIG. 16] FIG. 16 is a diagram illustrating an internal configuration example of the fingerprint authentication system in the seventh use case example of Embodiment 3.
[FIG. 17] FIG. 17 is a sequence diagram illustrating an operation procedure example of the fingerprint authentication system according to the seventh use case example of Embodiment 3.
[FIG. 18] FIG. 18 is a diagram illustrating an eighth use case example of the fingerprint authentication system according to Embodiment 4.
[FIG. 19] FIG. 19 is a diagram illustrating an internal configuration example of the fingerprint authentication system in the eighth use case example of Embodiment 4.
[FIG. 20] FIG. 20 is a diagram illustrating an example of a first conversion table.
[FIG. 21] FIG. 21 is a diagram illustrating an example of a second conversion table.
[FIG. 22] FIG. 22 is a sequence diagram illustrating an operation procedure example of the fingerprint authentication system according to the eighth use case example of Embodiment 4.

### DESCRIPTION OF EMBODIMENTS

### (Background of Present Disclosure)

In recent years, the use of biometric authentication has been expanding in airports, banks, and the like. In such biometric authentication, biometric information used for registration and authentication of biometric information is acquired using dedicated terminal devices. However, as the use of biometric authentication is expanded, for example, biometric information acquired by a terminal device dedicated to an airport installed in an airport and biometric information acquired by any terminal device possessed by a user are authenticated, biometric authentication using the biometric information acquired by different terminal devices is desired.

Here, Patent Literature 1 discloses, as an example of the biometric authentication, a fingerprint processing device that converts a first fingerprint image acquired by a 3D scanner into a second fingerprint image that is shown in a two-dimensional coordinate plane and in which a fingerprint is shown with desired image characteristics. However, the fingerprint processing device described in Patent Literature 1 requires a dedicated fingerprint sensor for acquiring the first fingerprint image and a dedicated fingerprint processing device for generating the second fingerprint image, and it is not assumed that biometric information acquired by any terminal device having a different acquisition method for biometric information is converted into biometric information suitable for predetermined biometric authentication.

Therefore, in each of the following embodiments, an example of a biometric data conversion device, a biometric data conversion method, and a biometric data conversion system that convert biometric information acquired by any acquisition method into biometric information that is biometrically authenticatable will be described.

Hereinafter, various embodiments that specifically disclose the configurations and operations of the biometric data conversion device, the biometric data conversion method, and the biometric data conversion system according to the present disclosure will be described in detail with reference to the drawings as appropriate. However, unnecessarily detailed description may be omitted. For example, the detailed description of well-known matters and the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims.

### (Embodiment 1)

### <First Use Case Example>

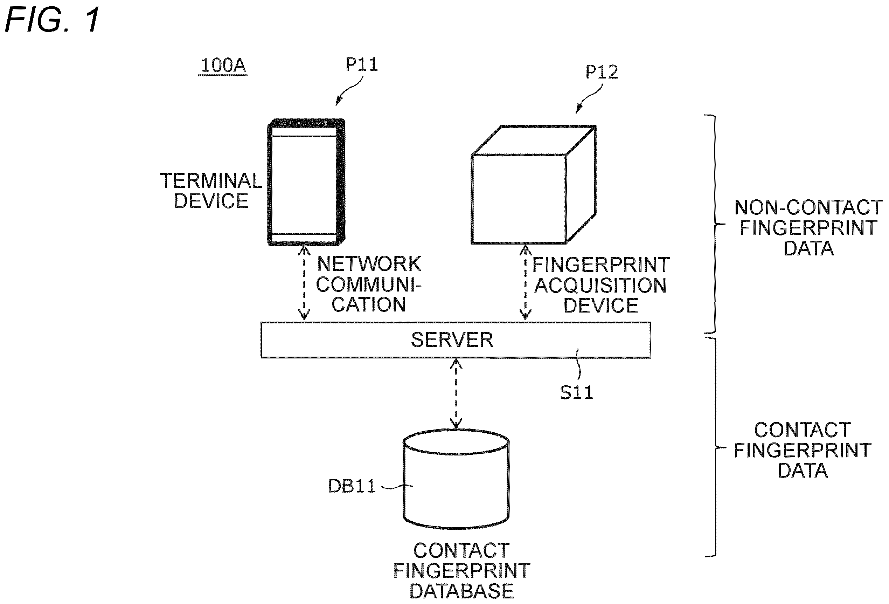

A first use case example of a fingerprint authentication system 100A according to Embodiment 1 will be described with reference to FIG. 1. FIG. 1 is a diagram illustrating the first use case example of the fingerprint authentication system 100A according to Embodiment 1. In the following embodiments, as an example of biometric authentication, conversion processing of biometric information when fingerprint authentication is performed will be described, but the biometric information used for biometric authentication is not limited to a fingerprint. The biometric authentication may be, for example, vein authentication or palm print authentication, or may be authentication using biometric data of any two or more types of a fingerprint, a vein, and a palm print.

The fingerprint authentication system 100A includes a terminal device P11, a fingerprint acquisition device P12, a server S11, and a contact fingerprint database DB11. The number of each of the terminal devices P11 and the fingerprint acquisition devices P12 may be plural.

The fingerprint authentication system 100A in the first use case example converts the fingerprint data (hereinafter, referred to as "non-contact fingerprint data") acquired from a fingertip of a user in a non-contact state by the terminal device P11 or the fingerprint acquisition device P12 into contact fingerprint data that is fingerprint data (hereinafter, referred to as "contact fingerprint data") acquired from the fingertip of the user in a contact state by the server S11 and is usable for collation (biometric authentication) with the contact fingerprint data registered in the contact fingerprint database DB11.

The fingerprint authentication system 100A stores (registers) the converted contact fingerprint data in the contact fingerprint database DB11. The fingerprint authentication system 100A performs biometric authentication by collating the converted contact fingerprint data with the contact fingerprint data registered in the contact fingerprint database DB11.

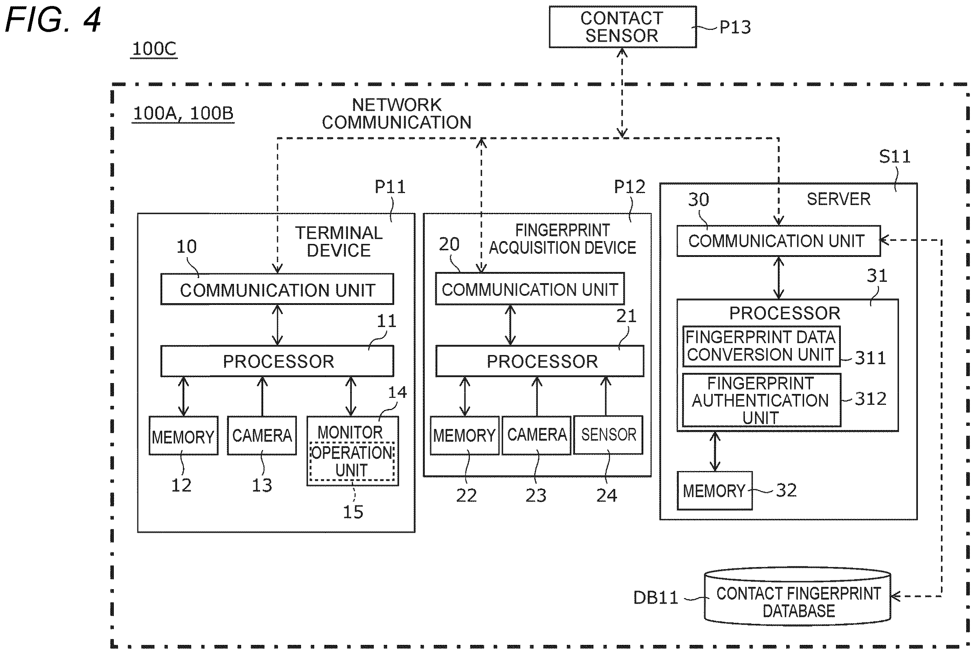

The terminal device P11 is a general-purpose device owned by a user who is a biometric authentication target or installed in a store, a company, or a facility that uses biometric authentication, and is realized by, for example, a smartphone, a tablet terminal, or the like. The terminal device P11 is connected to the server S11 via a network so as to be able to communicate data with the server S11. The terminal device P11 includes a camera 13 (see FIG. 4) and acquires the non-contact fingerprint data of the user.

The term "fingerprint data" in the following description includes the contact fingerprint data or the non-contact fingerprint data. In addition, the contact fingerprint data, the non-contact fingerprint data, and the fingerprint data are data including information on the fingerprint of the user, and are, for example, data of a fingerprint image obtained by capturing an images of a fingertip (fingerprint) of the user, feature data indicating individuality of the user extracted from the fingerprint image of the user, or data indicating a fingerprint shape pattern of the user.

The terminal device P11 in the first use case example acquires the fingerprint image obtained by capturing an image of a fingerprint of the user by capturing the image of the fingertip (fingerprint) of the user held within the field of view of the camera 13 in the non-contact state. The terminal device P11 extracts the information on a fingerprint such as the feature data indicating the individuality of the user or the fingerprint shape pattern based on the fingerprint image of the user acquired in the non-contact state. The terminal device P11 transmits the information on a fingerprint such as the fingerprint image of the user, the feature data indicating the individuality of the user, or the fingerprint shape pattern acquired in the non-contact state to the server S11 as the non-contact fingerprint data of the user.

The fingerprint acquisition device P12 is a dedicated device for acquiring the fingerprint data used for biometric authentication, and is installed in a store, a company, or the like that uses biometric authentication. The fingerprint acquisition device P12 is connected to the server S11 via a network so as to be able to communicate data with the server S11. The fingerprint acquisition device P12 includes a camera 23 (see FIG. 4) and acquires the fingerprint data of the user in the non-contact state.

The fingerprint acquisition device P12 in the first use case example acquires the non-contact fingerprint data by capturing the image of the finger (fingerprint) of the user held within the field of view of the camera 23 in the non-contact state. The fingerprint acquisition device P12 transmits the non-contact fingerprint data to the server S11.

In the registration of the fingerprint data, the server S 11 is data-communicably connected to each of the terminal device P11 and the fingerprint acquisition device P12 via a network. The server S11 acquires the non-contact fingerprint data transmitted from each of the terminal device P11 and the fingerprint acquisition device P12. The server S 11 converts the acquired non-contact fingerprint data into contact fingerprint data that is collatable (biometrically authenticatable) with the contact fingerprint data registered in the contact fingerprint database DB11. The server S11 stores (registers) the converted contact fingerprint data and user information (for example, a user ID, a name, age, sex, or the like) in the contact fingerprint database DB11 in association with each other.

In performing biometric authentication, the server S11 collates the converted contact fingerprint data with at least one piece of contact fingerprint data registered in the contact fingerprint database DB11 to perform the biometric authentication (user authentication).

### <Second Use Case Example>

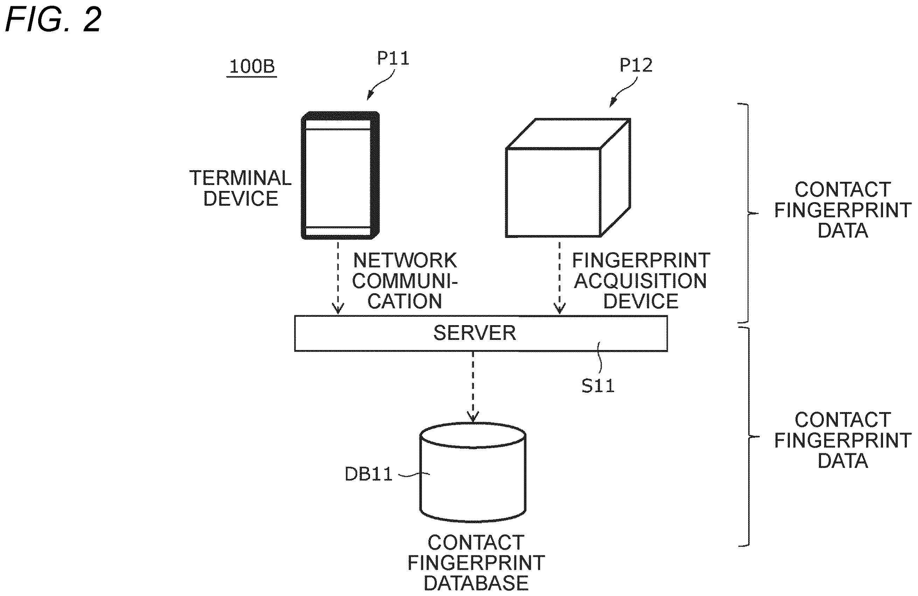

A second use case example of a fingerprint authentication system 100B according to Embodiment 1 will be described with reference to FIG. 2. FIG. 2 is a diagram illustrating the second use case example of the fingerprint authentication system 100B according to Embodiment 1. In the second use case example, since the terminal device P11 and the fingerprint acquisition device P12 are the same as those in the first use case example, the description thereof will be omitted, and only different processing and configurations will be described.

The fingerprint authentication system 100B includes the terminal device P11, the fingerprint acquisition device P12, the server S11, and the contact fingerprint database DB11. The number of each of the terminal devices P11 and the fingerprint acquisition devices P12 may be plural.

The fingerprint authentication system 100B in the second use case example converts the contact fingerprint data acquired from the fingertip of the user in the contact state by the terminal device P11 or the fingerprint acquisition device P12 into contact fingerprint data usable for collation (biometric authentication) with the contact fingerprint data registered in the contact fingerprint database DB11 by the server S11.

The fingerprint authentication system 100A stores (registers) the converted contact fingerprint data in the contact fingerprint database DB11. The fingerprint authentication system 100A performs biometric authentication by collating the converted contact fingerprint data with the contact fingerprint data registered in the contact fingerprint database DB11.

The terminal device P11 in the second use case example acquires the contact fingerprint data by reading the fingerprint of the user placed on an operation unit 15 (see FIG. 4) (that is, in the contact state). The terminal device P11 transmits the acquired contact fingerprint data to the server S11.

The fingerprint acquisition device P12 in the second use case example acquires the contact fingerprint data by reading the fingerprint of the user placed on a sensor 24 (see FIG. 4) (that is, in the contact state). The fingerprint acquisition device P12 transmits the acquired contact fingerprint data to the server S11.

The server S11 acquires the contact fingerprint data transmitted from each of the terminal device P11 and the fingerprint acquisition device P12. The server S11 converts the acquired contact fingerprint data into the contact fingerprint data that is collatable (biometrically authenticatable) with the contact fingerprint data registered in the contact fingerprint database DB11.

### <Third Use Case Example>

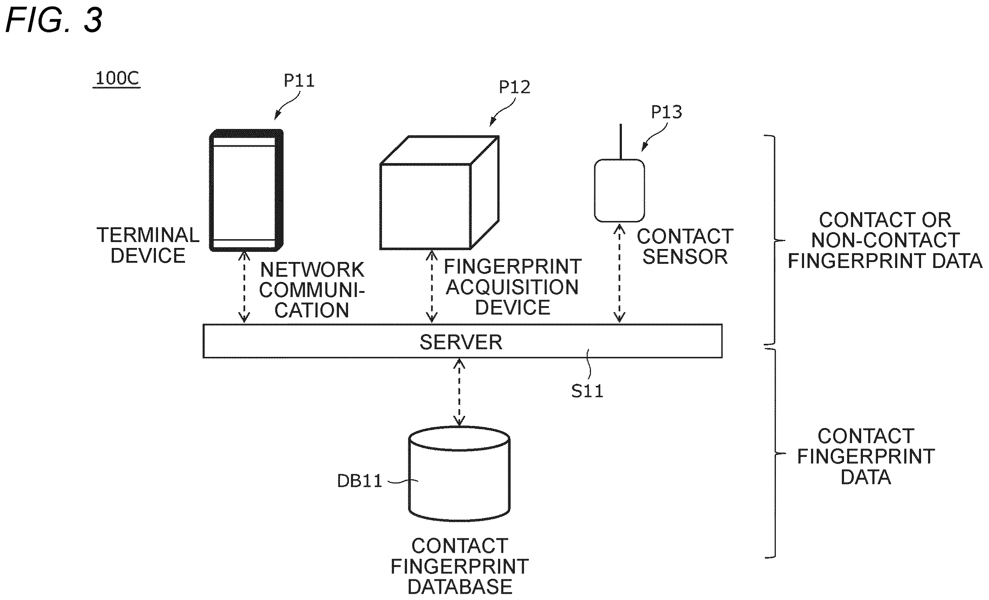

A third use case example of a fingerprint authentication system 100C according to Embodiment 1 will be described with reference to FIG. 3. FIG. 1 is a diagram illustrating the third use case example of the fingerprint authentication system 100C according to Embodiment 1. In the third use case example, since the terminal device P11 and the fingerprint acquisition device P12 are the same as those in the first use case example and the second use case example, the description thereof will be omitted, and only different processing and configurations will be described.

The fingerprint authentication system 100C includes the terminal device P11, the fingerprint acquisition device P12, the server S11, a contact sensor P13, and the contact fingerprint database DB11. The number of each of the terminal devices P11, the fingerprint acquisition devices P12, and the contact sensors P13 may be plural.

The fingerprint authentication system 100C in the third use case example converts the contact fingerprint data or the non-contact fingerprint data acquired by the terminal device P11 or the fingerprint acquisition device P12 by any acquisition method (the contact state or non-contact state) into the contact fingerprint data that is collatable (biometrically authenticatable) with the contact fingerprint data registered in the contact fingerprint database DB11 by the server S11. The fingerprint authentication system 100C determines that the contact fingerprint data acquired by the contact sensor P13 is contact fingerprint data that does not require conversion, and omits the conversion processing.

The fingerprint authentication system 100C stores (registers) the converted contact fingerprint data in the contact fingerprint database DB11. The fingerprint authentication system 100C performs biometric authentication by collating the converted contact fingerprint data with the contact fingerprint data registered in the contact fingerprint database DB11.

The terminal device P11 in the third use case example acquires the contact fingerprint data or the non-contact fingerprint data (fingerprint data) of the user by the camera 13 or the operation unit 15 (see FIG. 4). The terminal device P11 transmits the acquired contact fingerprint data or non-contact fingerprint data (fingerprint data) to the server S11.

The fingerprint acquisition device P12 in the third use case example acquires the contact fingerprint data or the non-contact fingerprint data (fingerprint data) by the camera 23 or the sensor 24 (see FIG. 4). The fingerprint acquisition device P12 transmits the acquired contact fingerprint data or non-contact fingerprint data (fingerprint data) to the server S11.

The contact sensor P13 is a dedicated device for acquiring the contact fingerprint data used for biometric authentication, and is installed in a store, a company, a facility, or the like that uses biometric authentication. The contact sensor P13 may be capable of acquiring the contact fingerprint data of the user by a known technique. The contact sensor P13 transmits the information on a fingerprint such as the feature data indicating the individuality of the user or the fingerprint shape pattern to the server S11 as the contact fingerprint data of the user. The contact sensor P13 may be capable of acquiring the contact fingerprint data that does not require conversion.

In the registration of the fingerprint data, the server S 11 in the third use case example acquires the contact fingerprint data or the non-contact fingerprint data transmitted from each of the terminal device P11, the fingerprint acquisition device P12, and the contact sensor P13. The server S11 converts the contact fingerprint data or the non-contact fingerprint data acquired by the terminal device P11 or the fingerprint acquisition device P12 into the contact fingerprint data that is collatable (biometrically authenticatable) with the contact fingerprint data registered in the contact fingerprint database DB11 based on impossible information, and omits the conversion processing on the contact fingerprint data acquired by the contact sensor P13. The server S 11 stores (registers) the converted contact fingerprint data and the user information (for example, a user ID, a name, age, sex, or the like) in the contact fingerprint database DB11 in association with each other.

In performing biometric authentication, the server S 11 collates the converted contact fingerprint data with at least one piece of contact fingerprint data registered in the contact fingerprint database DB11 to perform the biometric authentication (user authentication).

Next, internal configuration examples of the fingerprint authentication systems 100A to 100C in the first to third use case examples of Embodiment 1 will be described with reference to FIG. 4.

The terminal device P11 includes a communication unit 10, a processor 11, a memory 12, the camera 13, and a monitor 14. The terminal device P11 in the second use case example may not include the camera 13.

The communication unit 10 is communicably connected to the communication unit 30 of the server S11 via a network in a wireless or wired manner, and transmits and receives data. The wireless communication here is, for example, short-range wireless communication such as Bluetooth (registered trademark) or NFC (registered trademark), or communication via a wireless local area network (LAN) such as Wi-Fi (registered trademark).

The communication unit 10 transmits the fingerprint data of the user generated by the processor 11, the user information of the user, and additional information to the server S11 in association with each other when the fingerprint data is registered, and transmits the fingerprint data of the user generated by the processor 11 and the additional information to the server S11 when biometric authentication is performed.

The additional information referred to here is information related to an acquisition method for the fingerprint data or a device (for example, the terminal device P11, the fingerprint acquisition device P12, the contact sensor P13, or the like) from which the fingerprint data is acquired (generated). The additional information includes, for example, at least one of information indicating whether the fingerprint data is the contact fingerprint data or the non-contact fingerprint data, device information regarding the device from which the fingerprint data is acquired (generated), and information regarding the acquisition method or a generation method for the fingerprint data.

The device information is, for example, information indicating whether the device is a general-purpose device or a dedicated device for acquiring the fingerprint data, or identification information (for example, a model number or a device name) capable of identifying the device from which the fingerprint data is acquired or generated.

The information on the acquisition method or the generation method for the fingerprint data is a parameter of a camera in which the fingerprint image is captured, a sensing method for the fingerprint of the operation unit or the sensor in which the fingerprint data is acquired (for example, an electrostatic capacitance method, a thermal method, an ultrasonic method, a pressure-sensitive method, an optical method, and the like to be described later), a parameter used for sensing the fingerprint, and the like.

The processor 11 is implemented by, for example, a central processing unit (hereinafter referred to as "CPU"), a field programmable gate array (hereinafter referred to as "FPGA"), or a graphics processing unit (hereinafter referred to as "GPU"), and performs various types of processing and controls in cooperation with the memory 12. Specifically, the processor 11 realizes a function of acquiring the fingerprint data (specifically, the non-contact fingerprint data or the contact fingerprint data) of the user by referring to a program and data stored in the memory 12 and executing the program.

When an application capable of acquiring the fingerprint data is started by an input operation by a user or a person other than the user (for example, a person of a store or a company in which the terminal device P11 is installed), the processor 11 generates a control instruction requesting start of acquisition of fingerprint data and outputs the control instruction to the camera 13 or the operation unit 15.

When the non-contact fingerprint data is acquired using the camera 13, the processor 11 acquires the captured image output from the camera 13, and detects at least one fingertip including a first joint from the captured image obtained by capturing an image of the entire hand or at least one finger of the user. The processor 11 further detects a fingertip region including at least one detected fingertip to the first joint among the detected fingertips, and generates a fingerprint image obtained by cutting out a fingertip region of any one of the detected fingertip regions. The finger for which the fingerprint image is generated may be any finger or may be a finger designated in advance (for example, a middle finger that is easy to image and has the largest area).

The processor 11 may perform image analysis on the generated fingerprint image and extract the feature data indicating the individuality of the user. The processor 11 may detect which finger (for example, the middle finger or the index finger) the finger shown in the fingerprint image is, and generate finger information indicating which finger the finger shown in the fingerprint image is.

Here, the feature data may be extracted using a known technique (for example, a minutia method, a frequency feature analysis method, or the like). The minutia method is a method for extracting feature data of a fingerprint by detecting an end point or a branch point (a division) indicating a break of a cut line of the fingerprint in ridge lines of the fingerprint. The frequency feature analysis method is a method for extracting feature data of a fingerprint from a waveform of a frequency converted from the unevenness of a fingerprint as a frequency.

When the non-contact fingerprint data is acquired using the operation unit 15, the processor 11 acquires the contact fingerprint data from the fingertip of the user placed in a region of the operation unit 15 where the contact fingerprint data can be acquired. The finger placed on the operation unit 15 may be any finger or may be a finger designated in advance (for example, a middle finger that is easy to image and has the largest area). The processor 11 may output a message or an image designating a finger placed on the operation unit 15 of the monitor 14.

When the fingerprint data is registered, the processor 11 generates a control command requesting registration of the fingerprint data, outputs the generated control command, the user information received by the operation unit 15, the fingerprint data, and the additional information corresponding to the fingerprint data to the communication unit 10 in association with each other, and causes the communication unit 10 to transmit the control command, the user information, the fingerprint data, and the additional information to the server S11. The processor 11 may further transmit the finger information corresponding to the fingerprint data to the server S11 in association with the fingerprint data. When a registration result of the fingerprint data is acquired from the server S11, the processor 11 generates a notification screen (not illustrated) notifying the registration result of the fingerprint data, and outputs and displays the notification screen on the monitor 14.

When biometric authentication is performed, the processor 11 generates a control command requesting biometric authentication, outputs the generated control command, the fingerprint data, and the additional information corresponding to the fingerprint data to the communication unit 10 in association with each other, and causes the communication unit 10 to transmit the control command, the fingerprint data, and the additional information to the server S11. The processor 11 may further transmit the finger information corresponding to the fingerprint data to the server S11 in association with the fingerprint data. When a biometric authentication result of the fingerprint data is acquired from the server S11, the processor 11 generates a notification screen (not illustrated) notifying the biometric authentication result of the fingerprint data, and outputs and displays the notification screen on the monitor 14.

After transmitting the fingerprint data, the processor 11 deletes the fingerprint data or various data (for example, the fingerprint image or the like) used for generating the fingerprint data. Accordingly, the processor 11 can prevent leakage of the fingerprint data of the user and improve security.

The memory 12 includes, for example, a random access memory (hereinafter, referred to as a "RAM") as a work memory used when each processing of the processor 11 is performed, and a read only memory (hereinafter, referred to as a "ROM") storing a program and data defining each operation of the processor 11. The RAM temporarily stores data or information generated or acquired by the processor 11. The program that defines the operation of the processor 11 is written in the ROM.

The camera 13 includes at least a lens (not illustrated) and an image sensor (not illustrated). The image sensor is, for example, a solid-state imaging element such as a charged-coupled device (hereinafter referred to as "CCD") or a complementary metal oxide semiconductor (hereinafter referred to as "CMOS"), and converts an optical image formed on an imaging surface into an electric signal. The camera 13 starts capturing an image in response to an imaging start control instruction input by the processor 11 or an imaging operation by the user. The camera 13 outputs captured image to the processor 11.

The monitor 14 is implemented by using, for example, a liquid crystal display (hereinafter referred to as "LCD") or an organic electroluminescence (hereinafter referred to as "EL"). The monitor 14 outputs and displays the captured image captured by the camera 13 or various screens generated by the processor 11. In addition, when an alert to the effect that the user captures an image of the fingertip is input from the processor 11, the monitor 14 displays the alert or outputs the alert by voice using a speaker (not illustrated).

The operation unit 15 may be provided integrally with or separately from the monitor 14, and may be a touch interface including a touch panel, a fingerprint sensor, or the like. The operation unit 15 can receive the input operation by a user or a person other than the user, and outputs an input operation content to the processor 11. The operation unit 15 outputs the user information based on the input operation to the processor 11.

A plurality of operation units 15 may be provided in one terminal device P11, and the operation unit 15 may be any sensor capable of acquiring ridge lines (unevenness) of a fingerprint. For example, the operation unit 15 may be configured to acquire the non-contact fingerprint data or the contact fingerprint data using any known technique such as the electrostatic capacitance method for acquiring the fingerprint data based on a change in charge amount, the thermal method for acquiring the fingerprint data based on a change in temperature, the ultrasonic method for acquiring the fingerprint data based on a reception intensity or a reception accuracy of ultrasonic waves, the pressure-sensitive method for acquiring the fingerprint data based on a change in pressure, or the optical method for acquiring a shadow of light applied to a fingerprint.

The fingerprint acquisition device P12 includes a communication unit 20, a processor 21, a memory 22, the camera 23, and the sensor 24. The fingerprint acquisition device P12 in the first use case example may not include the sensor 24. The fingerprint acquisition device P12 in the second use case example may not include the camera 23. The fingerprint acquisition device P12 in the third use case example may include either the camera 23 or the sensor 24.

The communication unit 20 is communicably connected to the communication unit 30 of the server S11 via a network in a wireless or wired manner, and transmits and receives data. The communication unit 20 transmits the fingerprint data of the user generated by the processor 21, the user information of the user, and the additional information corresponding to the fingerprint data to the server S11 in association with each other when the fingerprint data is registered, and transmits the fingerprint data of the user generated by the processor 21 and the additional information corresponding to the fingerprint data to the server S11 when biometric authentication is performed. The communication unit 20 may further transmit the finger information corresponding to the fingerprint data output from the processor 21 to the server S11 in association with the fingerprint data.

Here, the fingerprint acquisition device P12 may be connected to an external device (not illustrated) capable of receiving the input operation by a user or a person other than the user so as to be able to transmit and receive data, and may acquire the user information from the external device.

The processor 21 is implemented by, for example, a CPU, a FPGA, or a GPU and performs various types of processing and controls in cooperation with the memory 22. Specifically, the processor 21 realizes a function of acquiring the fingerprint data (specifically, the non-contact fingerprint data or the contact fingerprint data) of the user by referring to a program and data stored in the memory 22 and executing the program.

For example, when an application capable of acquiring the fingerprint data is started by an operation of a person of a store or a company in which the fingerprint acquisition device P12 is installed, the processor 21 generates and outputs a control instruction to cause the camera 23 or the sensor 24 to start capturing images.

When the non-contact fingerprint data is acquired using the camera 23, the processor 21 acquires the captured image output from the camera 23, and detects at least one fingertip including a first joint from the captured image obtained by capturing the image of the entire hand or at least one finger of the user. The processor 21 further detects the fingertip region including at least one detected fingertip to the first joint among the detected fingertips, and generates the fingerprint image obtained by cutting out the fingertip region of any one of the detected fingertip regions. The finger for which the fingerprint image is generated may be any finger or may be a finger designated in advance (for example, a middle finger that is easy to image and has the largest area).

The processor 21 may perform image analysis on the generated fingerprint image and extract the feature data indicating the individuality of the user. The processor 21 may detect which finger (for example, the middle finger or the index finger) the finger shown in the fingerprint image is, and generate finger information indicating which finger the finger shown in the fingerprint image is.

When the non-contact fingerprint data is acquired using the sensor 24, the processor 21 acquires the contact fingerprint data of the user based on an output result of the sensor 24. The finger placed on the sensor 24 may be any finger or may be a finger designated in advance (for example, a middle finger that is easy to image and has the largest area).

When the fingerprint data is registered, the processor 21 generates a control command requesting registration of the fingerprint data, outputs the generated control command, the user information acquired from the external device (not illustrated), and the fingerprint data to the communication unit 20 in association with each other, and transmits the control command, the user information, and the fingerprint data to the server S11. The processor 21 may further transmit the finger information corresponding to the fingerprint data to the server S11 in association with the fingerprint data. When the registration result of the fingerprint data is acquired from the server S11, the processor 21 may generate a notification screen (not illustrated) notifying the registration result of the fingerprint data, output the notification screen to an external device (not illustrated), and display the notification screen.

When biometric authentication is performed, the processor 21 generates a control command requesting biometric authentication, outputs the generated control command and the fingerprint data to the communication unit 20 in association with each other, and transmits the control command and the fingerprint data to the server S11. The processor 21 may further transmit the finger information corresponding to the fingerprint data to the server S11 in association with the fingerprint data. When the biometric authentication result of the fingerprint data is acquired from the server S11, the processor 21 may generate a notification screen (not illustrated) notifying the biometric authentication result of the fingerprint data, output the notification screen to the external device (not illustrated), and display the notification screen.

After transmitting the fingerprint data, the processor 21 deletes the fingerprint data or various data (for example, the fingerprint image or the like) used for generating the fingerprint data. Accordingly, the processor 21 can prevent leakage of the fingerprint data of the user and improve security.

The memory 22 includes, for example, a RAM as a work memory used when each processing of the processor 21 is performed, and a ROM that stores a program and data defining an operation of the processor 21. The RAM temporarily stores data or information generated or acquired by the processor 21. The program that defines the operation of the processor 21 is written into the ROM.

The camera 23 includes at least a lens (not illustrated) and an image sensor (not illustrated). The image sensor is, for example, a solid-state imaging device such as a CCD or a CMOS, and converts an optical image formed on an imaging surface into an electrical signal. The camera 23 starts capturing an image in response to the imaging start control instruction input by the processor 21 or an imaging operation by the user. The camera 23 outputs the captured image to the processor 21.

The sensor 24 is a sensor capable of acquiring ridge lines (unevenness) and the like of the fingerprint, and outputs the acquired contact fingerprint data of the user to the processor 21. The sensor 24 may be configured to acquire the non-contact fingerprint data using any known technique such as the electrostatic capacitance method, the thermal method, the ultrasonic method, the pressure-sensitive method, or the optical method.

The contact sensor P13 is a sensor capable of acquiring the ridge lines (unevenness) or the like of the fingerprint from the placed fingertip of the user, and may have a configuration capable of acquiring the non-contact fingerprint data using any known technique such as the electrostatic capacitance method, the thermal method, the ultrasonic method, the pressure-sensitive method, or the optical method.

The server S11 includes a communication unit 30, a processor 31, and a memory 32. The server S11 may be configured integrally with the contact fingerprint database DB11.

The communication unit 30 is communicably connected to each of the terminal device P11, the fingerprint acquisition device P12, the contact sensor P13, and the contact fingerprint database DB11 via a network in a wireless or wired manner, and transmits and receives data. The communication unit 30 acquires the fingerprint data (the contact fingerprint data or the non-contact fingerprint data), the user information, the additional information, the control command, and the like from each of the terminal device P11, the fingerprint acquisition device P12, and the contact sensor P13, and outputs them to the processor 31. The communication unit 30 transmits the registration result or the biometric authentication result of the fingerprint data output from the processor 31 to a device corresponding to the fingerprint data (the terminal device P11, the fingerprint acquisition device P12, or the contact sensor P13).

The processor 31 is implemented by, for example, a CPU, a FPGA, or a GPU and performs various types of processing and controls in cooperation with the memory 32. Specifically, the processor 31 realizes functions of each unit by referring to a program and data stored in the memory 32 and executing the program. Note that the function of each unit described here is a function realized by a fingerprint data conversion unit 311, a fingerprint authentication unit 312, and the like, and is, for example, a function of converting the fingerprint data (specifically, the non-contact fingerprint data or the contact fingerprint data) of the user into the contact fingerprint data, a function of registering the converted contact fingerprint data in the contact fingerprint database DB11, a function of performing biometric authentication using the converted contact fingerprint data, and the like.

The fingerprint data conversion unit 311 converts the fingerprint data (the contact fingerprint data or the non-contact fingerprint data) transmitted from the terminal device P11 or the fingerprint acquisition device P12 into the contact fingerprint data that is collatable (biometrically authenticatable) with the contact fingerprint data registered in the contact fingerprint database DB11 based on the additional information associated with the fingerprint data. The fingerprint data conversion unit 311 outputs the converted contact fingerprint data to the fingerprint authentication unit 312 when biometric authentication is performed.

The fingerprint data conversion unit 311 determines that the conversion of the fingerprint data is not necessary when it is determined that the acquired fingerprint data is the contact fingerprint data acquired by a dedicated device that does not require conversion (for example, the contact sensor P13) or the acquired fingerprint data that is collatable (biometrically authenticatable) with the contact fingerprint data registered in the contact fingerprint database DB11, based on the acquired additional information. In such a case, the fingerprint data conversion unit 311 may omit the conversion processing of the fingerprint data.

When the fingerprint data is registered, the fingerprint data conversion unit 311 stores (registers) the converted contact fingerprint data and the user information in the contact fingerprint database DB11 in association with each other. The fingerprint data conversion unit 311 generates a registration result indicating that the registration is successful, and transmits the registration result to the corresponding device.

Here, when the fingerprint data conversion unit 311 acquires the finger information from the terminal device P11, the fingerprint acquisition device P12, or the contact sensor P13, the fingerprint data conversion unit 311 stores (registers) the converted contact fingerprint data, the user information, and the finger information in the contact fingerprint database DB11 in association with each other for each user.

When it is determined that the contact fingerprint data associated with the same user information is already registered in the contact fingerprint database DB11, the fingerprint data conversion unit 311 omits the registration processing of the converted contact fingerprint data, generates a registration result indicating that the registration is unsuccessful, and transmits the registration result to the corresponding device.

When there is contact fingerprint data registered in the contact fingerprint database DB11, the fingerprint data conversion unit 311 may overwrite the registered contact fingerprint data with the converted contact fingerprint data and register the converted contact fingerprint data. Further, based on the finger information, the fingerprint data conversion unit 311 may perform overwrite registration when the registered contact fingerprint data is contact fingerprint data associated with the same finger information, and may additionally register the converted contact fingerprint data when the registered contact fingerprint data is contact fingerprint data associated with different finger information.

The fingerprint authentication unit 312 performs biometric authentication by collating the converted contact fingerprint data output from the fingerprint data conversion unit 311 with each piece of the contact fingerprint data registered in the contact fingerprint database DB11. When biometric authentication is performed, the fingerprint authentication unit 312 collates (biometrically authenticates) the converted contact fingerprint data with each piece of the contact fingerprint data registered in the contact fingerprint database DB11. When it is determined that the contact fingerprint data that is the same as or similar to the converted contact fingerprint data is registered in the contact fingerprint database DB11, the fingerprint authentication unit 312 generates a biometric authentication result indicating that the biometric authentication is successful, and when it is determined that the contact fingerprint data that is the same as or similar to the converted contact fingerprint data is not registered in the contact fingerprint database DB11, the fingerprint authentication unit 312 generates a biometric authentication result indicating that the biometric authentication is unsuccessful, and transmits the biometric authentication result to the device corresponding to the contact fingerprint data.

The memory 32 includes, for example, a RAM as a work memory used when each processing of the processor 31 is performed, and a ROM that stores a program and data that define an operation of the processor 31. The RAM temporarily stores data or information generated or acquired by the processor 31. The program that defines the operation of the processor 31 is written into the ROM.

The contact fingerprint database DB11 is a so-called storage, and is implemented by a storage medium such as a flash memory, a hard disk drive (hereinafter referred to as "HDD"), or a solid state drive (hereinafter referred to as "SSD"). The contact fingerprint database DB11 stores (registers) and manages the contact fingerprint data and the user information transmitted from the server S11 for each user. The contact fingerprint database DB11 may be configured integrally with the server S11.

In the above description, a part of the description of the example in which the conversion processing of the fingerprint data is not necessary is omitted. When the conversion processing of the fingerprint data is not necessary, the server S11 performs registration of the contact fingerprint data of the user or biometric authentication using the contact fingerprint data by using unconverted fingerprint data (the contact fingerprint data) instead of the converted fingerprint data.

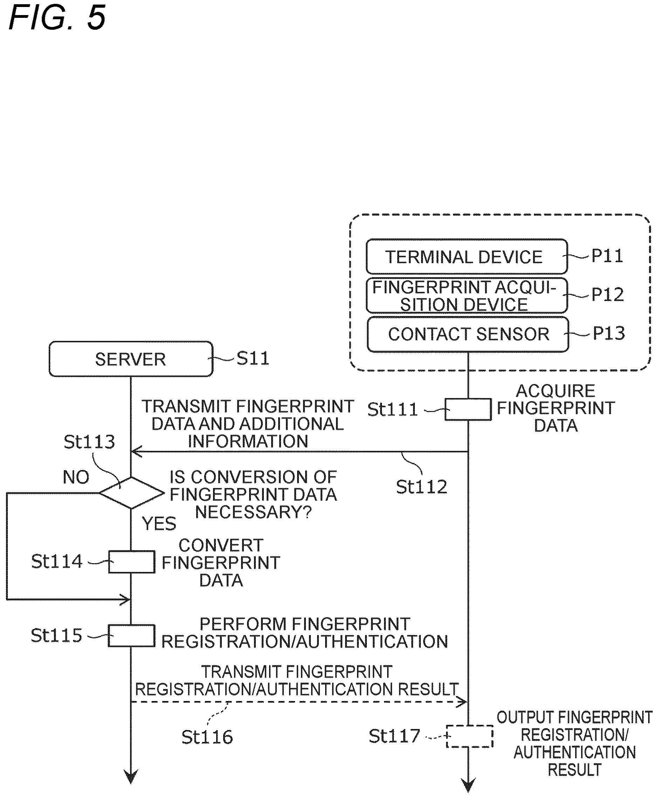

Next, an operation procedure example of the fingerprint authentication systems 100A to 100C according to the first to third use case examples will be described with reference to FIG. 5. FIG. 5 is a sequence diagram illustrating the operation procedure example of the fingerprint authentication systems 100A to 100C according to the first to third use case examples of Embodiment 1.

The terminal device P11, the fingerprint acquisition device P12, or the contact sensor P13 acquires the fingerprint data that is the contact fingerprint data or the non-contact fingerprint data (St111). The terminal device P11, the fingerprint acquisition device P12, or the contact sensor P13 generates a control command requesting either registration or biometric authentication of the fingerprint data, and transmits the generated control command, the additional information regarding the device itself, and the fingerprint data to the server S11 in association with each other (St112).

When the registration of the fingerprint data is requested, the terminal device P11, the fingerprint acquisition device P12, or the contact sensor P13 further transmits the user information to the server S11 in association therewith.

The server S11 determines whether conversion of the fingerprint data is necessary based on the additional information transmitted from the terminal device P11, the fingerprint acquisition device P12, or the contact sensor P13 (St113).

When it is determined in the processing of step St113 that conversion of the fingerprint data is necessary (St113, YES), the server S11 converts the fingerprint data into the contact fingerprint data that is collatable (biometrically authenticatable) with the contact fingerprint data registered in the contact fingerprint database DB11 (St114).

On the other hand, when it is determined in the processing of step St113 that the conversion of the fingerprint data is not necessary (St113, NO), the server S 11 omits the conversion processing of the fingerprint data. The server S11 determines that the conversion of the fingerprint data is not necessary when it is determined that the acquired fingerprint data is the contact fingerprint data acquired by a predetermined device or the acquired fingerprint data is the contact fingerprint data that is collatable (biometrically authenticatable) with the contact fingerprint data registered in the contact fingerprint database DB11 based on the acquired additional information.

The server S11 performs registration or biometric authentication of the contact fingerprint data of the user based on the control command transmitted from the terminal device P11, the fingerprint acquisition device P12, or the contact sensor P13 (St115). The server S11 generates the registration result of the contact fingerprint data or the biometric authentication result using the contact fingerprint data, and transmits the registration result or the biometric authentication result to the device (that is, the terminal device P11, the fingerprint acquisition device P12, or the contact sensor P13) that is an acquisition source (transmission source) of the fingerprint data (St116).

Specifically, when the server S11 in step Stl15 acquires the control command requesting registration of the contact fingerprint data of the user, the server S 11 determines whether the contact fingerprint data is already registered in the contact fingerprint database DB11 based on the user information associated with the fingerprint data. When it is determined that the contact fingerprint data is not registered in the contact fingerprint database DB11, the server S11 stores (registers) the contact fingerprint data and the user information in the contact fingerprint database DB11 in association with each other, and generates the registration result indicating that the registration of the fingerprint data is successful. On the other hand, when it is determined that the contact fingerprint data is already registered in the contact fingerprint database DB11, the server S11 interrupts the registration of the contact fingerprint data and generates the registration result indicating that the registration of the fingerprint data is unsuccessful.

The server S 11 may determine whether the contact fingerprint data is already registered in the contact fingerprint database DB11 based on the user information and the finger information corresponding to the fingerprint data. In such a case, the server S11 further determines whether the contact fingerprint data having the same finger information is already registered in the contact fingerprint database DB11.

Specifically, when the server S11 in step St115 acquires the control command requesting biometric authentication, the server S11 collates the contact fingerprint data with the contact fingerprint data registered in the contact fingerprint database DB11. When it is determined that the same or similar contact fingerprint data is already registered in the contact fingerprint database DB11, the server S11 generates a biometric authentication result indicating that the biometric authentication is successful. On the other hand, when it is determined that the same or similar contact fingerprint data is not registered in the contact fingerprint database DB11, the server S11 generates a biometric authentication result indicating that the biometric authentication is unsuccessful.

The terminal device P11, the fingerprint acquisition device P12, or the contact sensor P13 acquires the registration result or the biometric authentication result transmitted from the server S11, and outputs the acquired registration result or biometric authentication result to a monitor, a speaker, an external device (not illustrated), or the like (St117).

Note that each of step St116 and step St117 described above is not essential and may be omitted.

As described above, the server S 11 according to Embodiment 1 converts the fingerprint data into the contact fingerprint data that is collatable (biometrically authenticatable) with the contact fingerprint data registered in the contact fingerprint database DB11 even when appearance of the shape of the fingerprint or the unevenness of the ridge lines of the fingerprint acquired as the fingerprint data is different due to a difference in the acquisition method for the fingerprint data, a difference in the device from which the fingerprint data is acquired, a difference in the generation processing of the fingerprint data, or the like, so that it is possible to prevent a decrease in authentication accuracy of the biometric authentication. Further, in each of the fingerprint authentication systems 100A to 100C according to Embodiment 1, the device for acquiring the fingerprint data may be a general-purpose device or a dedicated device capable of acquiring the fingerprint data suitable for fingerprint authentication, and further, the contact fingerprint data that is biometrically authenticatable can be acquired and registered without limiting the acquisition method for the fingerprint data.

### (Embodiment 2)

The fingerprint authentication systems 100A to 100C according to Embodiment 1 have been described using the example in which the fingerprint data (the contact fingerprint data or the non-contact fingerprint data) acquired and generated by any acquisition method by each of the terminal device P11, the fingerprint acquisition device P12, and the contact sensor P13 is converted into the contact fingerprint data that is collatable (biometrically authenticatable) with the contact fingerprint data registered in the contact fingerprint database DB11. An example will be described in which a fingerprint authentication system 200 according to Embodiment 2 converts the fingerprint data into contact fingerprint data that is collatable (biometrically authenticatable) with contact fingerprint data collected by a device different from a server S21.

In the following description of the fingerprint authentication system 200 according to Embodiment 2, the same components as those of the fingerprint authentication systems 100A to 100C according to Embodiment 1 are denoted by the same reference numerals, and description thereof is omitted.

### <Fourth Use Case Example>

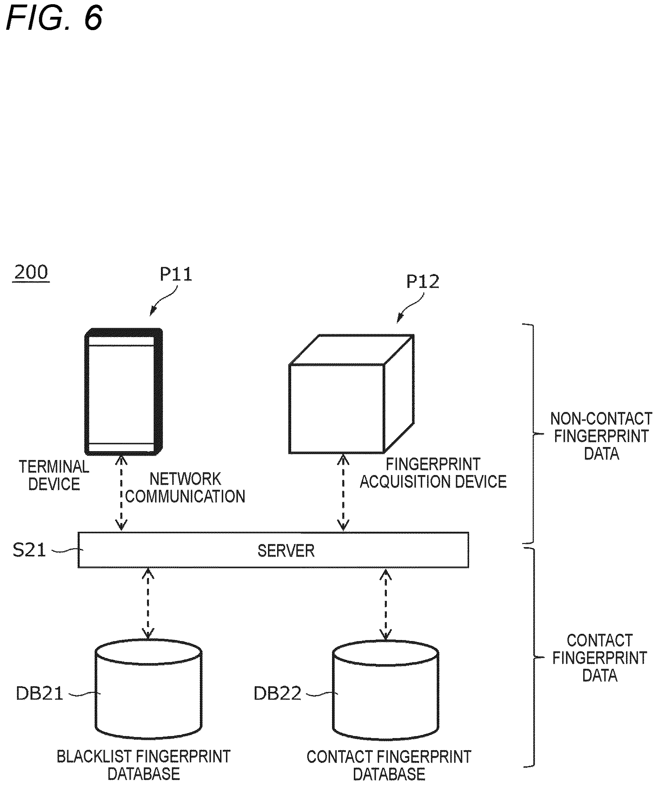

A fourth use case example corresponding to the fingerprint authentication system 200 according to Embodiment 2 will be described with reference to FIG. 6. Fig. 6 is a diagram illustrating the fourth use case example of the fingerprint authentication system 200 according to Embodiment 2. In the fourth use case example, since the terminal device P11 and the fingerprint acquisition device P12 are substantially the same as those in the first to third use case examples, the description thereof will be omitted, and only different processing and configurations will be described.

The fingerprint authentication system 200 according to Embodiment 2 includes the terminal device P11, the fingerprint acquisition device P12, the server S21, a blacklist fingerprint database DB21, and a contact fingerprint database DB22. The number of each of the terminal devices P11 and the fingerprint acquisition devices P12 may be plural.

The fingerprint authentication system 200 in the fourth use case example converts the non-contact fingerprint data acquired by the terminal device P11 or the fingerprint acquisition device P12 into the contact fingerprint data that is collatable (biometrically authenticatable) with contact fingerprint data registered in the contact fingerprint database DB22 by the server S21, and collates (biometrically authenticates) with contact fingerprint data registered in the blacklist fingerprint database DB21.

When it is determined that the contact fingerprint data that is the same as or similar to the converted contact fingerprint data is registered in the blacklist fingerprint database DB21 as a result of the collation (biometric authentication), the fingerprint authentication system 200 generates and outputs an alert indicating that a person registered in the blacklist fingerprint database DB21 is detected. When it is determined that the contact fingerprint data that is the same as or similar to the converted contact fingerprint data is not registered in the blacklist fingerprint database DB21 as a result of the collation (biometric authentication), the fingerprint authentication system 200 stores (registers) the converted contact fingerprint data in the contact fingerprint database DB22 or collates (biometric authenticates) the converted contact fingerprint data with the contact fingerprint data registered in the contact fingerprint database DB22.

The terminal device P11 is connected to the server S21 via a network so as to be able to communicate data with the server S21. The terminal device P11 includes the camera 13 (see FIG. 4) and acquires the non-contact fingerprint data of the user. The terminal device P11 transmits the acquired non-contact fingerprint data to the server S21.

The fingerprint acquisition device P12 is connected to the server S21 via a network so as to be able to communicate data with the server S21. The fingerprint acquisition device P12 includes the camera 23 (see FIG. 4) and acquires the non-contact fingerprint data. The fingerprint acquisition device P12 transmits the acquired non-contact fingerprint data to the server S21.

The server S21 is data-communicably connected to each of the terminal device P11 and the fingerprint acquisition device P12 via a network. The server S21 acquires the non-contact fingerprint data transmitted from each of the terminal device P11 and the fingerprint acquisition device P12.

The server S21 converts the acquired non-contact fingerprint data into the contact fingerprint data that is collatable (biometrically authenticatable) with the contact fingerprint data registered in the contact fingerprint database DB22. The server S21 collates the acquired contact fingerprint data with the contact fingerprint data registered in the blacklist fingerprint database DB21.

When it is determined that the converted contact fingerprint data is the contact fingerprint data that is the same as or similar to the contact fingerprint data registered in the blacklist fingerprint database DB21, the server S21 generates an alert and transmits the alert to the device corresponding to the converted contact fingerprint data. When it is determined that the converted contact fingerprint data is not the contact fingerprint data that is the same as or similar to the contact fingerprint data registered in the blacklist fingerprint database DB21, the server S21 registers the converted contact fingerprint data and the user information in the contact fingerprint database DB22, or collates (biometrically authenticates) the converted contact fingerprint data with the contact fingerprint data registered in the contact fingerprint database DB22.

The blacklist fingerprint database DB21 is a device (not illustrated) other than the server S21, is managed by, for example, a security company, an airport, or the police, and stores (registers) the contact fingerprint data of at least one user who is registered as a blacklist (detection target). The blacklist fingerprint database DB21 is connected to the server S21 so as to be able to transmit and receive data, and permits only reference (reading) of contact fingerprint data by the server S21 at the time of biometric authentication processing in order to detect a user who is registered as a blacklist.

The contact fingerprint database DB22 is connected to the server S21 so as to be able to transmit and receive data, and permits storage (registration or writing) of contact fingerprint data of at least one user by the server S21 and reference (reading) of the contact fingerprint data by the server S21 when biometric authentication is performed.

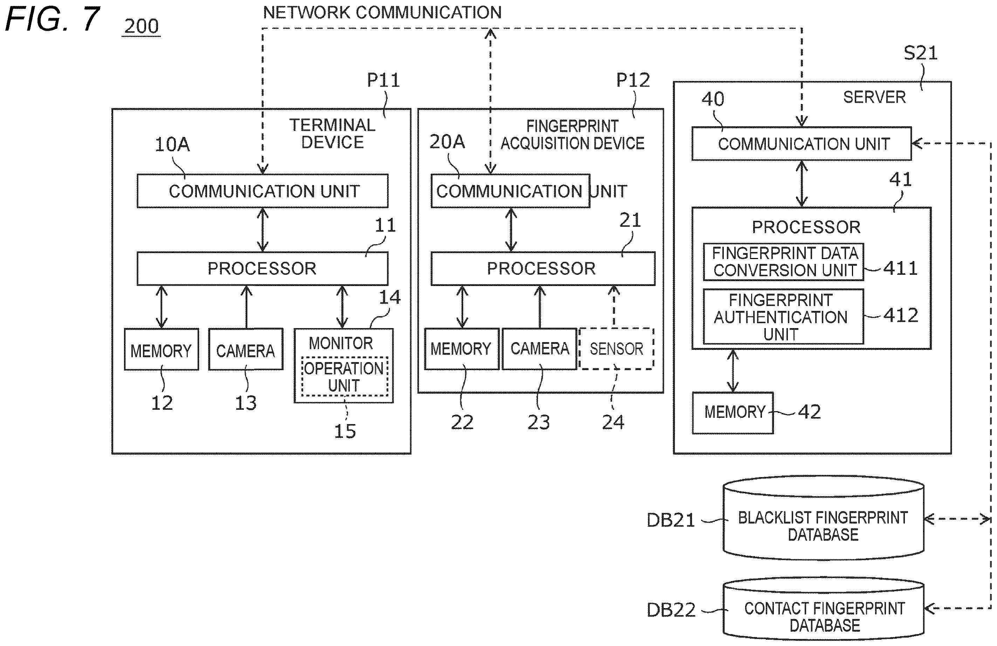

Next, an internal configuration example of the fingerprint authentication system 200 in the fourth use case example of Embodiment 2 will be described with reference to FIG. 7. In the following description of the terminal device P11 and the fingerprint acquisition device P12, only configuration different from the configurations described in FIG. 4 will be described, and description of same configurations will be omitted.

A communication unit 10A of the terminal device P11 in the fourth use case example is communicably connected to a communication unit 40 of the server S21 via a network in a wireless or wired manner, and transmits and receives data. The communication unit 10A transmits the non-contact fingerprint data of the user generated by the processor 11, the user information of the user, and the additional information corresponding to the non-contact fingerprint data to the server S21 in association with each other. The communication unit 10A may further transmit the finger information corresponding to the non-contact fingerprint data output from the processor 11 to the server S21 in association with the non-contact fingerprint data.

The communication unit 20A of the fingerprint acquisition device P12 in the fourth use case example is communicably connected to the communication unit 40 of the server S21 via a network in a wireless or wired manner, and transmits and receives data. The communication unit 20A transmits the non-contact fingerprint data of the user generated by the processor 21, the user information of the user, and the additional information corresponding to the non-contact fingerprint data to the server S21 in association with each other. The communication unit 20A may further transmit the finger information corresponding to the non-contact fingerprint data output from the processor 21 to the server S21 in association with the non-contact fingerprint data.

Here, in the fingerprint acquisition device P12 in the fourth use case example, the sensor 24 may be omitted.

The server S21 in the fourth use case example includes the communication unit 40, a processor 41, and a memory 42. The server S21 may be configured integrally with the contact fingerprint database DB22.

The communication unit 40 is communicably connected to each of the terminal device P11, the fingerprint acquisition device P12, the blacklist fingerprint database DB21, and the contact fingerprint database DB22 via a network in a wireless or wired manner, and transmits and receives data.

The communication unit 40 acquires the non-contact fingerprint data from each of the terminal device P11 and the fingerprint acquisition device P12, and outputs the acquired non-contact fingerprint data to the processor 41. The communication unit 40 transmits the registration result or the biometric authentication result of the fingerprint data output from the processor 41 to the device (the terminal device P11 or the fingerprint acquisition device P12) corresponding to the acquired fingerprint data.

In the biometric authentication, the communication unit 40 reads at least one piece of contact fingerprint data registered in the blacklist fingerprint database DB21 and outputs the contact fingerprint data to the processor 41. In the registration of the fingerprint data, the communication unit 40 outputs the contact fingerprint data output from the processor 41 and the user information to the contact fingerprint database DB22 to be stored (registered or written).

The processor 41 is implemented by, for example, a CPU, a FPGA, or a GPU and performs various types of processing and controls in cooperation with the memory 42. Specifically, the processor 41 realizes functions of each unit by referring to a program and data stored in the memory 42 and executing the program. Note that the function of each unit described here is a function realized by a fingerprint data conversion unit 411, a fingerprint authentication unit 412, and the like, and is, for example, a function of converting the non-contact fingerprint data of the user into the contact fingerprint data, a function of collating (biometric authenticating) the converted contact fingerprint data with the contact fingerprint data registered in the blacklist fingerprint database DB21, a function of registering or biometric authenticating the converted contact fingerprint data in the contact fingerprint database DB22, and the like.

The fingerprint data conversion unit 411 converts the non-contact fingerprint data transmitted from the terminal device P11 or the fingerprint acquisition device P12 into the contact fingerprint data that is collatable (biometrically authenticatable) with the contact fingerprint data registered in the blacklist fingerprint database DB21 based on the additional information. The fingerprint data conversion unit 411 outputs the converted contact fingerprint data to the fingerprint authentication unit 412.

The fingerprint authentication unit 412 collates (biometrically authenticates) the converted contact fingerprint data output from the fingerprint data conversion unit 411 with each piece of the contact fingerprint data registered in the blacklist fingerprint database DB21, and performs detection of a person registered in the blacklist.

When it is determined that the contact fingerprint data that is the same as or similar to the converted contact fingerprint data is registered in the blacklist fingerprint database DB21, the fingerprint authentication unit 412 generates an alert indicating that a person registered in the blacklist fingerprint database DB21 is detected. When it is determined that the contact fingerprint data that is the same as or similar to the converted contact fingerprint data is not registered in the blacklist fingerprint database DB21 based on the biometric authentication result, the fingerprint authentication unit 412 registers the converted contact fingerprint data used for the biometric authentication in the contact fingerprint database DB22 or collates (biometrically authenticates) the converted contact fingerprint data used for the biometric authentication with the contact fingerprint data registered in the contact fingerprint database DB22.

In the registration of the contact fingerprint data, the fingerprint authentication unit 412 determines whether the contact fingerprint data associated with the same user information is already registered in the contact fingerprint database DB22.

When it is determined that the contact fingerprint data associated with the same user information is not registered in the contact fingerprint database DB22, the fingerprint authentication unit 412 stores (registers) the converted contact fingerprint data and the user information in the contact fingerprint database DB22 in association with each other. When the fingerprint data conversion unit 411 acquires the finger information from the terminal device P11 or the fingerprint acquisition device P12, the fingerprint data conversion unit 411 may store (register) the converted contact fingerprint data and the finger information in the contact fingerprint database DB22 in association with each other for each user.

When it is determined that the contact fingerprint data associated with the same user information is already registered, the fingerprint authentication unit 412 omits the registration processing of the contact fingerprint data, generates a registration result indicating that the registration is unsuccessful, and transmits the registration result to the corresponding device.

When there is the contact fingerprint data registered in the contact fingerprint database DB22, the fingerprint authentication unit 412 may overwrite the registered contact fingerprint data with the converted contact fingerprint data and register the converted contact fingerprint data. Further, based on the finger information, the fingerprint authentication unit 412 may perform overwrite registration when the registered contact fingerprint data is the contact fingerprint data associated with the same finger information, and may additionally register the converted contact fingerprint data when the registered contact fingerprint data is the contact fingerprint data associated with different finger information.

In performing biometric authentication, the fingerprint authentication unit 412 collates (biometrically authenticates) the converted contact fingerprint data with each piece of the contact fingerprint data registered in the contact fingerprint database DB22. When it is determined that the contact fingerprint data that is the same as or similar to the converted contact fingerprint data is registered in the contact fingerprint database DB22, the fingerprint authentication unit 412 generates a biometric authentication result indicating that the biometric authentication is successful, and when it is determined that the contact fingerprint data that is the same as or similar to the converted contact fingerprint data is not registered in the contact fingerprint database DB22, the fingerprint authentication unit 412 generates a biometric authentication result indicating that the biometric authentication is unsuccessful, and transmits the biometric authentication result to the device corresponding to the contact fingerprint data.

The memory 42 includes, for example, a RAM as a work memory used when each processing of the processor 41 is performed, and a ROM that stores a program and data defining an operation of the processor 41. The RAM temporarily stores data or information generated or acquired by the processor 41. The program that defines the operation of the processor 41 is written into the ROM.

The blacklist fingerprint database DB21 is a so-called storage, and is implemented by a storage medium such as a flash memory, an HDD, or an SSD.

The contact fingerprint database DB22 is a so-called storage, and is implemented by a storage medium such as a flash memory, an HDD, or an SSD. The contact fingerprint database DB22 stores (registers) and manages the contact fingerprint data and the user information transmitted from the server S21 for each user. The contact fingerprint database DB22 may be configured integrally with the server S21.

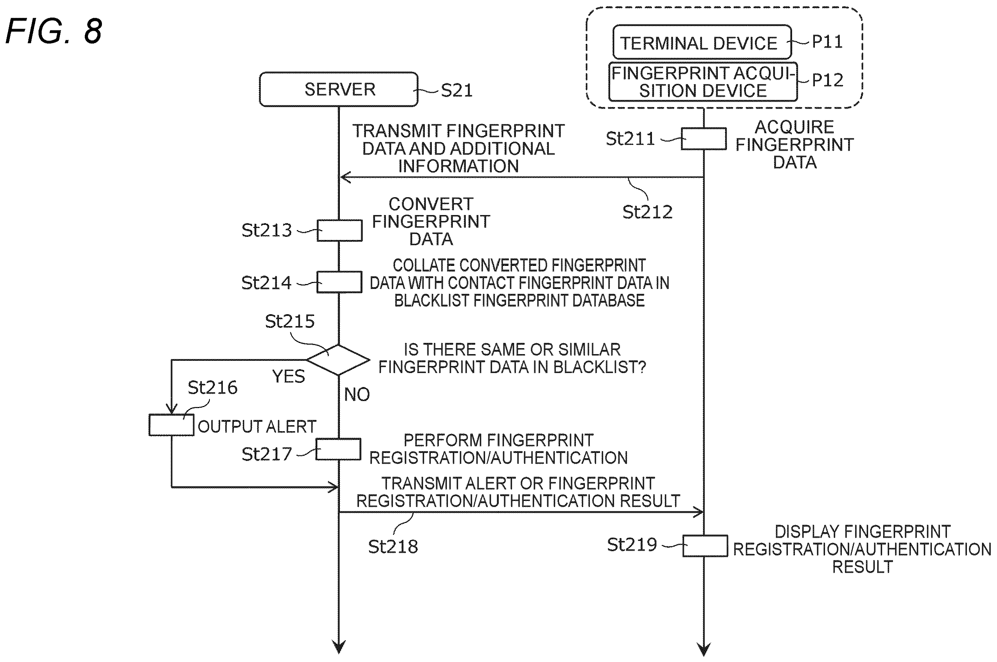

Next, an operation procedure example of the fingerprint authentication system 200 according to the fourth use case example will be described with reference to FIG. 8. FIG. 8 is a sequence diagram illustrating the operation procedure example of the fingerprint authentication system 200 according to the fourth use case example of Embodiment 2.

The terminal device P11 or the fingerprint acquisition device P12 acquires the non-contact fingerprint data as the fingerprint data (St211). The terminal device P11 or the fingerprint acquisition device P12 generates the control command requesting the registration and the biometric authentication of fingerprint data, and transmits the generated control command, the additional information regarding the device itself, and the non-contact fingerprint data to the server S21 in association with each other (St212).

The server S21 converts the acquired non-contact fingerprint data into the contact fingerprint data that is collatable with the contact fingerprint data registered in the blacklist fingerprint database DB21 based on the additional information transmitted from the terminal device P11 or the fingerprint acquisition device P12 (St213).

The server S21 collates the converted contact fingerprint data with the contact fingerprint data registered in the blacklist fingerprint database DB21 (St215).

When it is determined in the processing of step St215 that the contact fingerprint data registered in the blacklist fingerprint database DB21 includes the contact fingerprint data that is the same as or similar to the converted contact fingerprint data (St215, YES), the server S21 generates the alert indicating that a person registered in the blacklist fingerprint database DB21 is detected (St216). The server S21 transmits the generated alert to the device that is the transmission source of the non-contact fingerprint data (St218).

The server S21 generates the registration result or the biometric authentication result of the contact fingerprint data, and transmits the registration result or the biometric authentication result to the device that is the transmission source of the non-contact fingerprint data (that is, the terminal device P11 or the fingerprint acquisition device P12) (St218). The server S21 may transmit the registration result or the biometric authentication result of the contact fingerprint data and the biometric authentication result indicating that the user registered in the blacklist fingerprint database DB21 is not detected in association with each other to the device that is the transmission source of the non-contact fingerprint data.

On the other hand, when it is determined in the processing of step St215 that there is no same or similar contact fingerprint data in the contact fingerprint data registered in the blacklist fingerprint database DB21 (St215, NO), the server S21 performs registration or biometric authentication of the converted contact fingerprint data (St217).

The terminal device P11 or the fingerprint acquisition device P12 acquires the alert, the registration result, or the biometric authentication result transmitted from the server S21, and outputs the acquired alert, registration result, or biometric authentication result to a monitor, a speaker (not illustrated), an external device (not illustrated), or the like (St219).

As described above, the server S21 according to Embodiment 2 can prevent a decrease in the authentication accuracy of the biometric authentication not only when the appearance of the shape of the fingerprint or the unevenness of the ridge lines of the fingerprint acquired as the fingerprint data is different due to a difference in the acquisition method for the fingerprint data, a difference in the device from which the fingerprint data is acquired, a difference in generation processing of the fingerprint data, or the like, but also when the algorithm used for the biometric authentication is different, or when the biometric authentication is performed using the database (the blacklist fingerprint database DB21 or the contact fingerprint database DB22) in which the fingerprint data is registered by a device different from the server S21 or a server (not illustrated).

As a result, in the fingerprint authentication system 200 according to Embodiment 2, the device for acquiring the fingerprint data may be a general-purpose device or a dedicated device capable of acquiring the fingerprint data suitable for fingerprint authentication, and biometric authentication can be performed without limiting the acquisition method for the fingerprint data.

### (Embodiment 3)

The fingerprint authentication systems 100A to 100C and 200 according to Embodiment 1 and Embodiment 2 have been described as an example in which the fingerprint data acquired or generated by any device or any acquisition method is converted into the contact fingerprint data used for each biometric authentication performed by the servers S11, S21. An example will be described in which a fingerprint authentication system 300A according to Embodiment 3 converts fingerprint data acquired by a predetermined fingerprint acquisition device P32 into fingerprint data usable for biometric authentication performed by each of a first server and a second server different from each other.

In the following description of the fingerprint authentication system 300A according to Embodiment 3, the same components as those of the fingerprint authentication systems 100A to 100C and 200 according to Embodiment 1 and Embodiment 2 are denoted by the same reference numerals, and the description thereof will be omitted.

### <Fifth Use Case Example>

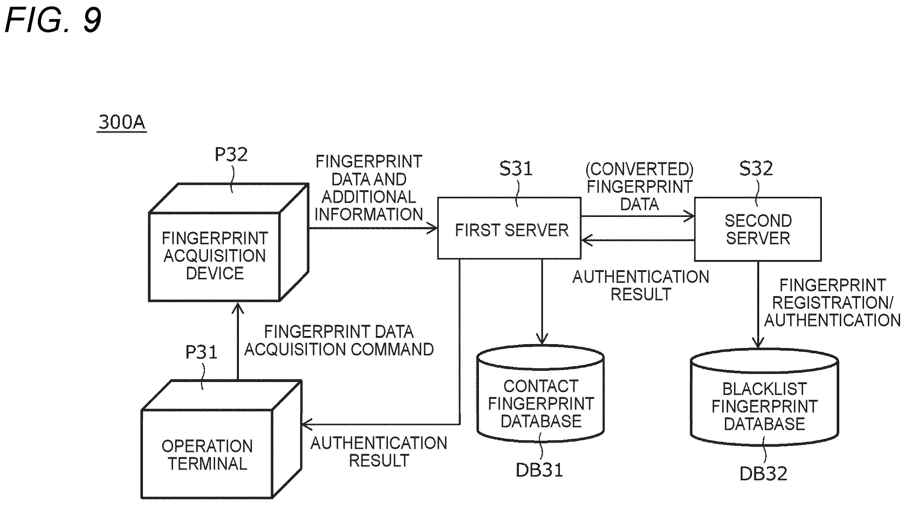

A fifth use case example corresponding to a fingerprint authentication system 300A according to Embodiment 3 will be described with reference to FIG. 9. Fig. 9 is a diagram illustrating the fifth use case example of the fingerprint authentication system 300A according to Embodiment 3.

The fingerprint authentication system 300A according to Embodiment 3 includes an operation terminal P31, a fingerprint acquisition device P32, a first server S31, a second server S32, a contact fingerprint database DB31, and a blacklist fingerprint database DB32. The number of each of operation terminals P31 and the fingerprint acquisition devices P32 may be plural. The operation terminal P31 and the first server S31 may be integrally configured.

The fingerprint authentication system 300A in the fifth use case example acquires the fingerprint data (the contact fingerprint data or the non-contact fingerprint data) of the user by the fingerprint acquisition device P32 based on an operation of the operation terminal P31 by the person who acquires the fingerprint data. The fingerprint authentication system 300A converts the fingerprint data acquired by the fingerprint acquisition device P32 into first contact fingerprint data that is collatable (biometrically authenticatable) with the contact fingerprint data registered in the contact fingerprint database DB31 and second contact fingerprint data that is collatable (biometrically authenticatable) with the contact fingerprint data registered in the blacklist fingerprint database DB32, by the first server S31.

In the registration of the fingerprint data, the fingerprint authentication system 300A stores (registers) the first contact fingerprint data in the contact fingerprint database DB31 by the first server S31, and stores (registers) the second contact fingerprint data in the blacklist fingerprint database DB32 by the second server S32.

In the fingerprint authentication system 300A, in performing biometric authentication, the first server S31 collates (biometrically authenticates) the first contact fingerprint data with the contact fingerprint data registered in the contact fingerprint database DB31, and the second server S32 collates (biometrically authenticates) the second contact fingerprint data with the contact fingerprint data registered in the blacklist fingerprint database DB32.

The operation terminal P31 is connected to the fingerprint acquisition device P32 and the first server S31 via a network so as to be able to communicate data with the fingerprint acquisition device P32 and the first server S31. The operation terminal P31 can receive an input operation by a person (for example, a person of a store, a company, or a facility where the operation terminal P31 is installed) who performs an operation of acquiring fingerprint data of a user, generates a control command corresponding to the input operation, and transmits the control command to the fingerprint acquisition device P32.

The fingerprint acquisition device P32 is a dedicated device for acquiring the fingerprint data used for biometric authentication, and is installed in a store, a company, a facility, or the like that uses biometric authentication. The fingerprint acquisition device P32 starts acquisition processing of the fingerprint data based on the control command transmitted from the operation terminal P31. The fingerprint acquisition device P32 transmits the acquired fingerprint data and the additional information corresponding to the fingerprint data to the first server S31 in association with each other.

The first server S31 converts the acquired non-contact fingerprint data into the first contact fingerprint data that is collatable (biometrically authenticatable) with the contact fingerprint data registered in the contact fingerprint database DB31 based on the additional information transmitted from the fingerprint acquisition device P32. In addition, the first server S31 converts the acquired non-contact fingerprint data into the second contact fingerprint data that is collatable (biometrically authenticatable) with the contact fingerprint data registered in the blacklist fingerprint database DB32 based on the additional information transmitted from the fingerprint acquisition device P32.

The first contact fingerprint data and the second contact fingerprint data may be the same contact fingerprint data or may be different contact fingerprint data.

In the registration of the fingerprint data, the first server S31 stores (registers) the converted first contact fingerprint data and the user information in the contact fingerprint database DB31 in association with each other.

In performing biometric authentication, the first server S31 performs the biometric authentication by collating the acquired first contact fingerprint data with the contact fingerprint data registered in the contact fingerprint database DB31.

In the registration of the fingerprint data, the second server S32 acquires the converted second contact fingerprint data transmitted from the first server S31, and stores (registers) the acquired second contact fingerprint data and the user information in the blacklist fingerprint database DB32 in association with each other.

In performing biometric authentication, the second server S32 acquires the converted second contact fingerprint data transmitted from the first server S31 and collates the acquired second contact fingerprint data with the contact fingerprint data registered in the blacklist fingerprint database DB32 to perform the biometric authentication.

The contact fingerprint database DB31 is connected to the first server S31 so as to be able to transmit and receive data, and permits storage (registration or writing) of the contact fingerprint data (that is, first contact fingerprint data) of at least one user by the first server S31 and reference (reading) of the contact fingerprint data by the first server S31 when biometric authentication is performed.

The blacklist fingerprint database DB32 is connected to the second server S32 so as to be able to transmit and receive data, and permits storage (registration or writing) of the contact fingerprint data (that is, the second contact fingerprint data) of at least one user by the second server S32 and reference (reading) of the contact fingerprint data by the second server S32 when biometric authentication is performed.

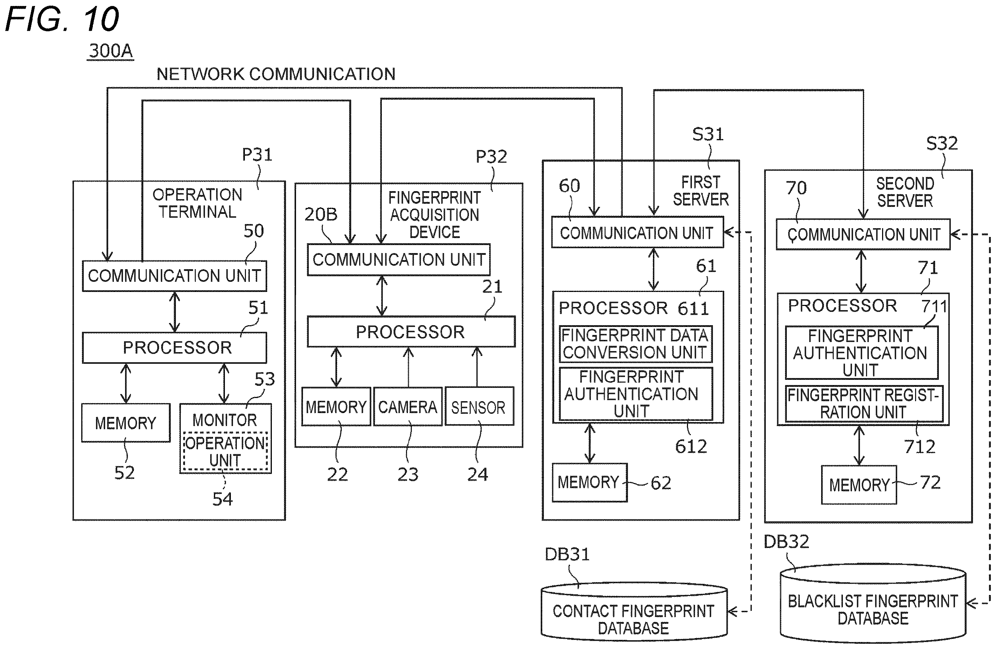

Next, an internal configuration example of the fingerprint authentication system 300A in the fifth use case example of Embodiment 3 will be described with reference to FIG. 10. FIG. 10 is a diagram illustrating the internal configuration example of the fingerprint authentication system 300A in the fifth use case example of Embodiment 3. Since the configuration of the fingerprint acquisition device P32 described below is substantially the same as that of the fingerprint acquisition device P12 described in FIG. 4, only different configurations will be described, and description of the same configurations will be omitted.

The operation terminal P31 includes a communication unit 50, a processor 51, a memory 52, and a monitor 53.

The communication unit 50 is communicably connected to a communication unit 20B of the fingerprint acquisition device P32 and a communication unit 60 of the first server S31 via a network in a wireless or wired manner, and transmits and receives data. The communication unit 50 transmits the control command or the user information generated by the processor 51 to the fingerprint acquisition device P32. The communication unit 50 outputs the alert, and the registration result or the biometric authentication result of the fingerprint data transmitted from the first server S31 to the processor 51.

The processor 51 is implemented by, for example, a CPU, a FPGA, or a GPU and performs various types of processing and controls in cooperation with the memory 52. Specifically, the processor 51 implements each function by referring to a program and data stored in the memory 52 and executing the program.

The processor 51 generates a control command requesting the fingerprint acquisition device P32 to acquire the fingerprint data in response to the input operation content output from the operation unit 54. The processor 51 generates the user information based on the input operation content output from the operation unit 54. The processor 51 outputs the generated control command or user information to the communication unit 50 and causes the communication unit 50 to transmit the generated control command or user information to the fingerprint acquisition device P32. The processor 51 generates an alert or a notification screen (not illustrated) based on the registration result or the biometric authentication result of the fingerprint data transmitted from the first server S31, and outputs the alert or the notification screen to the monitor 53.

The memory 52 includes, for example, a RAM as a work memory used when each processing of the processor 51 is performed, and a ROM that stores a program and data defining an operation of the processor 51. The RAM temporarily stores data or information generated or acquired by the processor 51. The program that defines the operation of the processor 51 is written into the ROM.

The monitor 53 is implemented using, for example, an LCD or an organic EL. The monitor 53 outputs and displays the notification screen (not illustrated) based on the registration result or the biometric authentication result of the fingerprint data generated by the processor 51.

The operation unit 54 may be provided integrally with or separately from the monitor 53, and may be a touch interface including a touch panel, a fingerprint sensor, or the like. The operation unit 54 can receive the operation of the operation terminal P31 by a person who acquires the fingerprint data, and outputs the input operation content to the processor 51. The operation unit 54 outputs the user information based on the input operation to the processor 51.

The fingerprint acquisition device P32 includes the communication unit 20B, the processor 21, the memory 22, the camera 23, and the sensor 24. The fingerprint acquisition device P32 in the fifth use case example may include at least one of the camera 23 and the sensor 24.

The communication unit 20B is communicably connected to the communication unit 50 of the operation terminal P31 and the communication unit 60 of the first server S31 via a network in a wireless or wired manner, and transmits and receives data. The communication unit 20B transmits the fingerprint data of the user generated by the processor 21, the additional information corresponding to the fingerprint data, and the user information of the user to the first server S31 in association with each other when the fingerprint data is registered, and transmits the fingerprint data of the user generated by the processor 21 and the additional information corresponding to the fingerprint data to the first server S31 in association with each other when biometric authentication is performed.

The first server S31 includes the communication unit 60, a processor 61, and a memory 62. The first server S31 may be configured integrally with the contact fingerprint database DB31.

The communication unit 60 is communicably connected to each of the operation terminal P31, the fingerprint acquisition device P32, the contact fingerprint database DB31, and the second server S32 via a network in a wireless or wired manner, and transmits and receives data.

The communication unit 60 acquires the control command, the fingerprint data (the contact fingerprint data or the non-contact fingerprint data), the additional information corresponding to the fingerprint data, the user information, and the like transmitted from the fingerprint acquisition device P32, and outputs them to the processor 61. The communication unit 60 transmits the registration result or the biometric authentication result of the fingerprint data transmitted from the second server S32 to the operation terminal P31.

The communication unit 60 transmits the second contact fingerprint data and the control command output from the processor 61 to the second server S32. Further, the communication unit 60 transmits the registration result or the biometric authentication result of the fingerprint data output from the processor 61 and performed by each of the processor 61 and a processor 71 to the operation terminal P31.

The processor 61 is implemented by, for example, a CPU, a FPGA, or a GPU and performs various types of processing and controls in cooperation with the memory 62. Specifically, the processor 61 realizes functions of each unit by referring to a program and data stored in the memory 62 and executing the program. Note that the function of each unit described here is a function realized by a fingerprint data conversion unit 611, a fingerprint authentication unit 612, and the like, and is, for example, a function of converting the fingerprint data (specifically, the non-contact fingerprint data or the contact fingerprint data) of the user into the first contact fingerprint data and the second contact fingerprint data, respectively, a function of registering the converted first contact fingerprint data in the contact fingerprint database DB31, a function of performing biometric authentication using the converted first contact fingerprint data, and the like.

The fingerprint data conversion unit 611 converts the fingerprint data (the contact fingerprint data or the non-contact fingerprint data) transmitted from the fingerprint acquisition device P32 into the first contact fingerprint data and the second contact fingerprint data, respectively, based on the additional information. The fingerprint data conversion unit 611 outputs the converted first contact fingerprint data to the fingerprint authentication unit 612, outputs the converted second contact fingerprint data to the communication unit 60, and causes the communication unit 60 to transmit the second contact fingerprint data to the second server S32.

In the registration of the fingerprint data, the fingerprint data conversion unit 611 stores (registers) the converted first contact fingerprint data and the user information in the contact fingerprint database DB31 in association with each other. The fingerprint data conversion unit 611 generates a registration result indicating that the registration is successful, and transmits the registration result to the operation terminal P31. When the fingerprint data conversion unit 611 acquires the finger information corresponding to the fingerprint data from the fingerprint acquisition device P32, the fingerprint data conversion unit 611 stores (registers) the converted first contact fingerprint data and the finger information in the contact fingerprint database DB31 in association with each other for each user.

When it is determined that the contact fingerprint data associated with the same user information is already registered in the contact fingerprint database DB31, the fingerprint data conversion unit 611 omits the registration processing of the converted first contact fingerprint data, generates a registration result indicating that the registration is unsuccessful, and transmits the registration result to the operation terminal P31.

When there is contact fingerprint data registered in the contact fingerprint database DB31, the fingerprint data conversion unit 611 may overwrite the registered contact fingerprint data with the converted first contact fingerprint data and register the converted first contact fingerprint data. Further, based on the finger information, the fingerprint data conversion unit 611 may perform overwrite registration when the registered contact fingerprint data is the contact fingerprint data associated with the same finger information, and may additionally register the converted first contact fingerprint data when the registered contact fingerprint data is contact fingerprint data associated with different finger information.

In performing biometric authentication, the fingerprint authentication unit 612 performs the biometric authentication by collating the converted first contact fingerprint data output from the fingerprint data conversion unit 611 with each piece of the contact fingerprint data registered in the contact fingerprint database DB31. When it is determined that the contact fingerprint data that is the same as or similar to the converted first contact fingerprint data is registered in the contact fingerprint database DB31, the fingerprint authentication unit 612 generates a biometric authentication result indicating that the biometric authentication is successful, and when it is determined that the contact fingerprint data that is the same as or similar to the converted first contact fingerprint data is not registered in the contact fingerprint database DB31, the fingerprint authentication unit 612 generates a biometric authentication result indicating that the biometric authentication is unsuccessful, and transmits the biometric authentication result to the operation terminal P31.

The memory 62 includes, for example, a RAM as a work memory used when each processing of the processor 61 is performed, and a ROM that stores a program and data defining an operation of the processor 61. The RAM temporarily stores data or information generated or acquired by the processor 61. The program that defines the operation of the processor 61 is written into the ROM.

The contact fingerprint database DB31 is a so-called storage, and is implemented by a storage medium such as a flash memory, an HDD, or an SSD. The contact fingerprint database DB31 stores (registers) and manages the first contact fingerprint data and the user information transmitted from the first server S31 for each user. The contact fingerprint database DB31 may be configured integrally with the first server S31.

The second server S32 includes a communication unit 70, a processor 71, and a memory 72. The second server S32 may be configured integrally with the blacklist fingerprint database DB32.

The communication unit 70 is communicably connected to the first server S31 and the blacklist fingerprint database DB32 via a network in a wireless or wired manner, and transmits and receives data.

The communication unit 70 acquires the control command, the fingerprint data (the contact fingerprint data or the non-contact fingerprint data), or the user information transmitted from the first server S31, and outputs them to the processor 71. The communication unit 70 transmits the registration result or the biometric authentication result of the fingerprint data output from the processor 71 to the operation terminal P31.

The processor 71 is implemented by, for example, a CPU, a FPGA, or a GPU and performs various types of processing and controls in cooperation with the memory 72. Specifically, the processor 71 realizes functions of each unit by referring to a program and data stored in the memory 72 and executing the program. The function of each unit described here is a function realized by a fingerprint authentication unit 711, a fingerprint registration unit 712, and the like, and is, for example, a function of performing biometric authentication using the second contact fingerprint data, a function of registering the second contact fingerprint data in the blacklist fingerprint database DB32, and the like.

In the registration of the fingerprint data, the processor 71 stores (registers) the converted second contact fingerprint data and the user information in the blacklist fingerprint database DB32 in association with each other. The processor 71 generates a registration result indicating that the registration is successful, and transmits the registration result to the first server S31. When the processor 71 acquires the finger information corresponding to the second contact fingerprint data from the first server S31, the processor 71 stores (registers) the converted second contact fingerprint data and the finger information in the blacklist fingerprint database DB32 in association with each other for each user.

When it is determined that the contact fingerprint data associated with the same user information is already registered in the blacklist fingerprint database DB32, the processor 71 omits the registration processing of the converted second contact fingerprint data, generates a registration result indicating that the registration is unsuccessful, and transmits the registration result to the first server S31.

When there is registered contact fingerprint data in the blacklist fingerprint database DB32, the processor 71 may overwrite the registered contact fingerprint data with the converted second contact fingerprint data and register the converted second contact fingerprint data. Further, based on the finger information, the fingerprint registration unit 712 may perform overwrite registration when the registered contact fingerprint data is the contact fingerprint data associated with the same finger information, and may additionally register the converted second contact fingerprint data when the registered contact fingerprint data is the contact fingerprint data associated with different finger information.

The fingerprint authentication unit 711 performs biometric authentication by collating the converted second contact fingerprint data transmitted from the first server S31 with each piece of the contact fingerprint data registered in the blacklist fingerprint database DB32. The fingerprint authentication unit 711 generates a biometric authentication result and transmits the biometric authentication result to the first server S31.

The fingerprint authentication unit 711 collates (biometrically authenticates) the converted second contact fingerprint data with each piece of the contact fingerprint data registered in the blacklist fingerprint database DB32, and performs detection of a person registered in the blacklist.

When it is determined that the contact fingerprint data that is the same as or similar to the converted second contact fingerprint data is registered in the blacklist fingerprint database DB32, the fingerprint authentication unit 711 generates an alert indicating that a person registered in the blacklist fingerprint database DB32 is detected, and transmits the alert to the first server S31. When it is determined that the contact fingerprint data that is the same as or similar to the converted second contact fingerprint data is not registered in the blacklist fingerprint database DB32 based on the biometric authentication result, the fingerprint authentication unit 711 generates a biometric authentication result indicating that the biometric authentication is unsuccessful (that is, the person registered in the blacklist fingerprint database DB32 is not detected) and transmits the biometric authentication result to the first server S31.

In the registration of the fingerprint data, the fingerprint registration unit 712 stores (registers) the converted second contact fingerprint data and the user information in the blacklist fingerprint database DB32 in association with each other. The fingerprint registration unit 712 generates a registration result indicating that the registration is successful, and transmits the registration result to the first server S31. When the fingerprint registration unit 712 acquires the finger information corresponding to the fingerprint data from the first server S31, the fingerprint registration unit 712 stores (registers) the converted second contact fingerprint data and the finger information in the blacklist fingerprint database DB32 in association with each other for each user.

When it is determined that the contact fingerprint data associated with the same user information is already registered in the blacklist fingerprint database DB32, the fingerprint registration unit 712 omits the registration processing of the converted second contact fingerprint data, generates a registration result indicating that the registration is unsuccessful, and transmits the registration result to the first server S31.

When there is registered contact fingerprint data in the blacklist fingerprint database DB32, the fingerprint registration unit 712 may overwrite the registered contact fingerprint data with the converted second contact fingerprint data and register the converted second contact fingerprint data. Further, based on the finger information, the fingerprint registration unit 712 may perform overwrite registration when the registered contact fingerprint data is the contact fingerprint data associated with the same finger information, and may additionally register the converted second contact fingerprint data when the registered contact fingerprint data is the contact fingerprint data associated with different finger information.

The memory 72 includes, for example, a RAM as a work memory used when each processing of the processor 71 is performed, and a ROM that stores a program and data defining an operation of the processor 71. The RAM temporarily stores data or information generated or acquired by the processor 71. The program that defines the operation of the processor 71 is written into the ROM.

The blacklist fingerprint database DB32 is a so-called storage, and is implemented by a storage medium such as a flash memory, an HDD, or an SSD. The blacklist fingerprint database DB32 stores (registers) and manages the contact fingerprint data (the second contact fingerprint data) and the user information transmitted from the first server S31 for each user. The blacklist fingerprint database DB32 may be configured integrally with the second server S32.

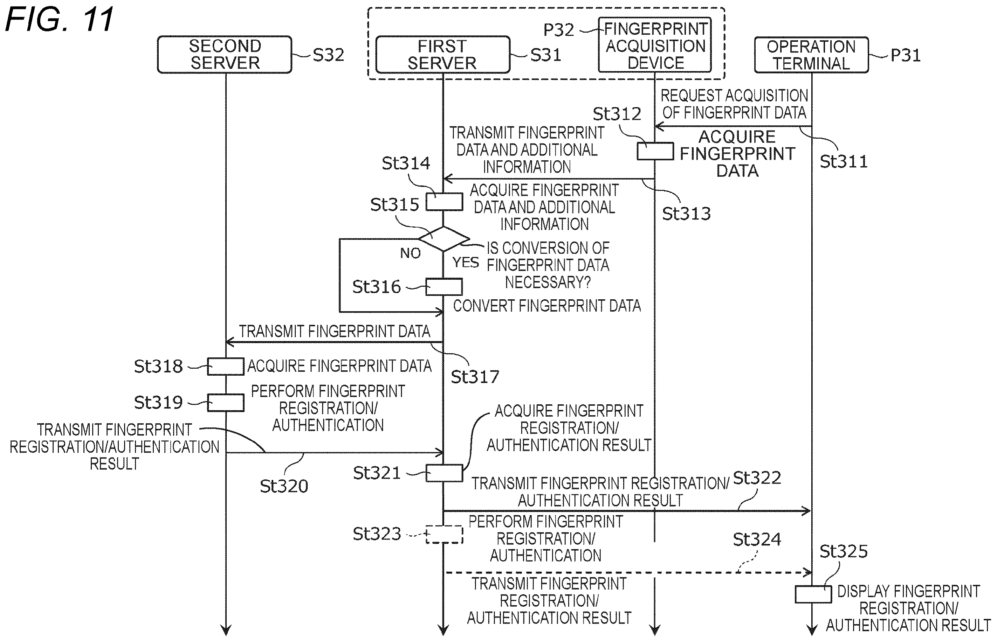

Next, an operation procedure example of the fingerprint authentication system 300A according to the fifth use case example will be described with reference to FIG. 11. FIG. 11 is a sequence diagram illustrating the operation procedure example of the fingerprint authentication system 300A according to the fifth use case example of Embodiment 3.

In the operation procedure example of the fingerprint authentication system 300A illustrated in FIG. 11, an example will be described in which the registration or biometric authentication of the fingerprint data performed by the first server S31 is not essential, but the present disclosure is not limited thereto. In the description of FIG. 11, the description of an example in which the conversion processing of the fingerprint data is not necessary is omitted. When the conversion processing of the fingerprint data is not necessary, the first server S31 or the second server S32 performs registration of the contact fingerprint data of the user or biometric authentication using the contact fingerprint data by using the unconverted fingerprint data (the contact fingerprint data or the non-contact fingerprint data).

The operation terminal P31 generates a control command including a request for causing the fingerprint acquisition device P32 to acquire the fingerprint data and a request for executing either registration or biometric authentication of the fingerprint data based on an input operation by a person who acquires the fingerprint data. The operation terminal P31 transmits the generated control command to the fingerprint acquisition device P32 (St311). When the registration of the fingerprint data is requested, the operation terminal P31 receives the input of the user information and transmits the input user information of the user in association with the control command.

The fingerprint acquisition device P32 acquires the fingerprint data (the non-contact fingerprint data or the contact fingerprint data) of the user by a predetermined acquisition method based on the control command transmitted from the operation terminal P31 (St312). The fingerprint acquisition device P32 generates a control command requesting either registration or biometric authentication of the acquired fingerprint data of the user, and transmits the generated control command, the fingerprint data, and the additional information to the first server S31 in association with each other (St313). When the registration of the fingerprint data is requested, the fingerprint acquisition device P32 further transmits (transfers) the user information acquired from the operation terminal P31 in association therewith.

The first server S31 acquires the fingerprint data and the additional information transmitted from the fingerprint acquisition device P32 (St314). The first server S31 determines whether conversion of the fingerprint data is necessary based on the additional information (St315).

When it is determined in the processing of step St315 that conversion of the fingerprint data is necessary (St315, YES), the first server S31 converts the acquired fingerprint data into the first contact fingerprint data that is collatable (biometrically authenticatable) with the fingerprint data registered in the contact fingerprint database DB31 and the second contact fingerprint data that is collatable (biometrically authenticatable) with the fingerprint data registered in the blacklist fingerprint database DB32 (St316). When it is determined that the conversion into the fingerprint data corresponding to one of the contact fingerprint database DB31 and the blacklist fingerprint database DB32 is not necessary, the first server S31 may perform only the conversion processing into either one of the contact fingerprint data (that is, the first contact fingerprint data or the second contact fingerprint data) for which it is determined that the conversion of the fingerprint data is necessary.

On the other hand, when it is determined in the processing of step St315 that the conversion of the fingerprint data is not necessary (St315, NO), the first server S31 omits the conversion processing of the fingerprint data.

The first server S31 transmits, to the second server S32, the converted second contact fingerprint data and the control command requesting either registration or authentication of the fingerprint data of the user in association with each other (St317).

The second server S32 acquires the second contact fingerprint data transmitted from the first server S31 (St318). Based on the control command, the second server S32 performs the registration processing of registering the second contact fingerprint data and the user information in the blacklist fingerprint database DB32, or the biometric authentication processing of collating at least one piece of fingerprint data registered in the blacklist fingerprint database DB32 with the second contact fingerprint data (St319). The second server S32 generates a registration result or an authentication result of the acquired second contact fingerprint data and transmits the registration result or the authentication result to the first server S31 (St320).

The first server S31 transmits the registration result or the authentication result of the second contact fingerprint data transmitted from the second server S32 to the operation terminal P31 that is the transmission (acquisition) source of the fingerprint data (St322).

The first server S31 performs the registration processing of registering the first contact fingerprint data and the user information in the contact fingerprint database DB31 or the biometric authentication processing of collating at least one piece of fingerprint data registered in the contact fingerprint database DB31 with the first contact fingerprint data (St323).

The first server S31 generates the registration result or the biometric authentication result of the first contact fingerprint data and transmits the registration result or the biometric authentication result to the operation terminal P31 (St324).

In the processing of step St321, when the authentication result of the acquired second contact fingerprint data indicates that there is fingerprint data to be collated with the second contact fingerprint data in the blacklist fingerprint database DB32 (that is, the user is a person registered in the blacklist), the first server S31 may omit the processing of each of step St323 to step St324.

The operation terminal P31 outputs the registration result or the biometric authentication result of the second contact fingerprint data corresponding to the blacklist fingerprint database DB32 transmitted from the first server S31 to a monitor, a speaker (not illustrated), an external device (not illustrated), or the like (St325). The operation terminal P31 outputs the registration result or the biometric authentication result of the first contact fingerprint data corresponding to the contact fingerprint database DB31 transmitted from the first server S31 to a monitor, a speaker (not illustrated), an external device (not illustrated), or the like (St325).

As described above, the first server S31 according to Embodiment 3 converts the fingerprint data acquired by the fingerprint acquisition device P32 into the contact fingerprint data that is collatable with the fingerprint data registered in each of the contact fingerprint database DB31 and the blacklist fingerprint database DB32 managed by different stores, facilities, or companies, so that it is possible to prevent a decrease in the authentication accuracy of the biometric authentication performed by each of the first server S31 and the second server S32.

Accordingly, the first server S31 according to Embodiment 3 enables a plurality types of different biometric authentication to be performed with one piece of fingerprint data acquired by the fingerprint acquisition device P32. For example, when an inspector at an airport acquires fingerprint data of an entry-entering person (user), the first server S31 converts one piece of acquired fingerprint data, so that it is possible to realize registration of fingerprint data in a contact fingerprint database managed by the airport and biometric authentication (detection of a blacklist registrant) by collation with a blacklist fingerprint database managed by the police of a country of an entry-entering country. In addition, for example, the first server S31 can realize biometric authentication (personal authentication) by collation with the contact fingerprint database managed by the airport and biometric authentication (the detection of the blacklist registrant) by collation with the blacklist fingerprint database managed by the police of a country of an entry destination by converting one piece of the acquired fingerprint data.

### <Sixth Use Case Example>

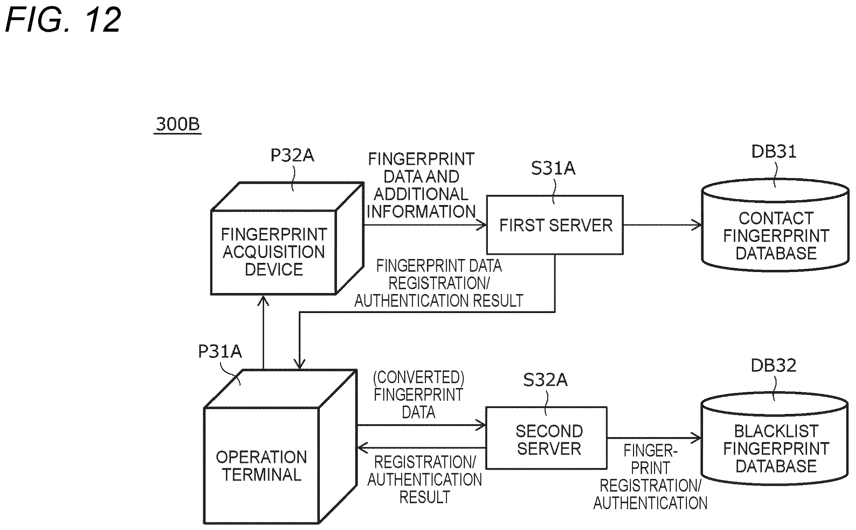

A sixth use case example corresponding to a fingerprint authentication system 300B according to Embodiment 3 will be described with reference to FIG. 12. Fig. 12 is a diagram illustrating the sixth use case example of the fingerprint authentication system 300B according to Embodiment 3. In the description of the sixth use case example, the same components as those of the fifth use case example are denoted by the same reference numerals, and the description thereof will be omitted.

The fingerprint authentication system 300B includes an operation terminal P31A, a fingerprint acquisition device P32A, a first server S31A, a second server S32A, the contact fingerprint database DB31, and the blacklist fingerprint database DB32. The number of each of the operation terminals P31A and the fingerprint acquisition devices P32A may be plural.

The fingerprint authentication system 300B in the sixth use case example acquires the fingerprint data (the contact fingerprint data or the non-contact fingerprint data) of the user by the fingerprint acquisition device P32A. The fingerprint authentication system 300B converts the fingerprint data acquired by the fingerprint acquisition device P32A into the first contact fingerprint data and the second contact fingerprint data, and performs registration or biometric authentication of the first contact fingerprint data, by the first server S31A.

The fingerprint authentication system 300B transmits the second contact fingerprint data from the first server S31A to the second server S32A via the operation terminal P31A, and performs registration or biometric authentication of the second contact fingerprint data by the second server S32A.

The fingerprint acquisition device P32A in the sixth use case example is a dedicated device for acquiring the fingerprint data used for biometric authentication, and is installed in a store, a company, a facility, or the like that uses biometric authentication. The fingerprint acquisition device P32A acquires the fingerprint data and transmits the acquired fingerprint data and additional information corresponding to the fingerprint acquisition device P32A to the first server S31A in association with each other.

The first server S31A in the sixth use case example converts the acquired fingerprint data into the first contact fingerprint data that is collatable (biometrically authenticatable) with the contact fingerprint data registered in the contact fingerprint database DB31 and the second contact fingerprint data that is collatable (biometrically authenticatable) with the contact fingerprint data registered in the blacklist fingerprint database DB32, based on the additional information transmitted from the fingerprint acquisition device P32A. The first server S31A performs registration or biometric authentication of the converted first contact fingerprint data.

The operation terminal P31A in the sixth use case example acquires the second contact fingerprint data transmitted from the first server S31A and the registration result or the biometric authentication result of the first contact fingerprint data performed by the first server S31A. The operation terminal P31A outputs and notifies the registration result or the biometric authentication result of the first contact fingerprint data, and transmits (transfers) the second contact fingerprint data transmitted from the first server S31A to the second server S32A. The operation terminal P31A acquires the registration result or the biometric authentication result of the second contact fingerprint data transmitted from the second server S32A, and outputs and notifies the registration result or the biometric authentication result.

The second server S32A in the sixth use case example performs registration or biometric authentication of the second contact fingerprint data transmitted from the operation terminal P31A. The second server S32A generates a registration result or a biometric authentication result of the second contact fingerprint data and transmits the registration result or the biometric authentication result to the operation terminal P31A.

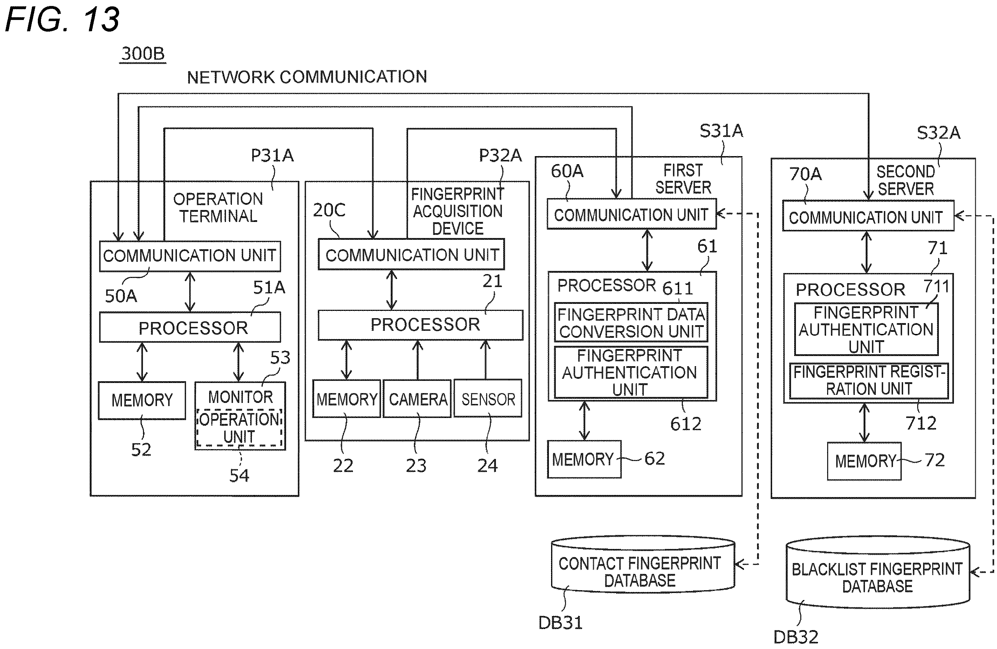

Next, an internal configuration example of the fingerprint authentication system 300B in the sixth use case example of Embodiment 3 will be described with reference to FIG. 13. FIG. 13 is a diagram illustrating the internal configuration example of the fingerprint authentication system 300B in the sixth use case example of Embodiment 3. In the following description of the sixth use case example, the same components as those of the fifth use case example are denoted by the same reference numerals, and the description thereof will be omitted.

The operation terminal P31A includes a communication unit 50A, a processor 51A, the memory 52, and the monitor 53.

The communication unit 50A is communicably connected to a communication unit 20C of the fingerprint acquisition device P32A, a communication unit 60A of the first server S31A, and a communication unit 70A of the second server S32A via a network in a wireless or wired manner, and transmits and receives data.

The communication unit 50A transmits a control command generated by the processor 51A and the user information to the fingerprint acquisition device P32A. The communication unit 50A outputs the registration result or the biometric authentication result of the fingerprint data (the first contact fingerprint data) transmitted from the first server S31A, the control command, the user information, the second contact fingerprint data, and the like to the processor 51A. The communication unit 50A outputs the registration result or the biometric authentication result of the fingerprint data (the second contact fingerprint data) transmitted from the second server S32A to the processor 51A.

The processor 51A is implemented by, for example, a CPU, a FPGA, or a GPU and performs various types of processing and controls in cooperation with the memory 52. Specifically, the processor 51A implements each function by referring to a program and data stored in the memory 52 and executing the program.

The processor 51A generates the control command requesting the fingerprint acquisition device P32A to acquire the fingerprint data and registration or biometric authentication of the fingerprint data in response to the input operation content output from the operation unit 54. The processor 51A generates the user information based on the input operation content output from the operation unit 54. The processor 51A outputs the generated control command or user information to the communication unit 50A and causes the communication unit 50A to transmit the generated control command or user information to the fingerprint acquisition device P32A. The processor 51A generates an alert or a notification screen (not illustrated) based on the registration result or the biometric authentication result of the fingerprint data transmitted from the first server S31A or the second server S32A, and outputs the alert or the notification screen to the monitor 53.

The fingerprint acquisition device P32A includes the communication unit 20C, the processor 21, the memory 22, the camera 23, and the sensor 24. The fingerprint acquisition device P32A in the sixth use case example may include at least one of the camera 23 and the sensor 24.

The communication unit 20C is communicably connected to the communication unit 50A of the operation terminal P31A and the communication unit 60A of the first server S31A via a network in a wireless or wired manner, and transmits and receives data. The communication unit 20C transmits a control command requesting registration or biometric authentication of the fingerprint data transmitted from the operation terminal P31A, the fingerprint data of the user generated by the processor 21, the user information, and the additional information to the first server S31A in association with each other when the fingerprint data is registered, and transmits a control command requesting registration or biometric authentication of the fingerprint data transmitted from the operation terminal P31A, the fingerprint data of the user generated by the processor 21, and the additional information to the first server S31A when biometric authentication is performed.

The first server S31A includes the communication unit 60A, the processor 61, and the memory 62. The first server S31A may be configured integrally with the contact fingerprint database DB31.

The communication unit 60A is communicably connected to each of the operation terminal P31A, the fingerprint acquisition device P32A, and the contact fingerprint database DB31 via a network in a wireless or wired manner, and transmits and receives data.

The communication unit 60A acquires the control command, the fingerprint data (the contact fingerprint data or the non-contact fingerprint data), the user information, or the additional information transmitted from the fingerprint acquisition device P32A, and outputs them to the processor 61. The communication unit 60A transmits the second contact fingerprint data output from the processor 61 and the registration result or the biometric authentication result of the first contact fingerprint data performed by the processor 61 to the operation terminal P31A.

The second server S32A includes the communication unit 70A, the processor 71, and the memory 72. The second server S32A may be configured integrally with the blacklist fingerprint database DB32.

The communication unit 70A is communicably connected to the operation terminal P31A via a network in a wireless or wired manner, and transmits and receives data.

The communication unit 70A acquires the control command, the second contact fingerprint data (the contact fingerprint data or the non-contact fingerprint data), or the user information from the operation terminal P31A and outputs them to the processor 71. The communication unit 70A transmits the registration result or the biometric authentication result of the second contact fingerprint data output from the processor 71 to the operation terminal P31A.

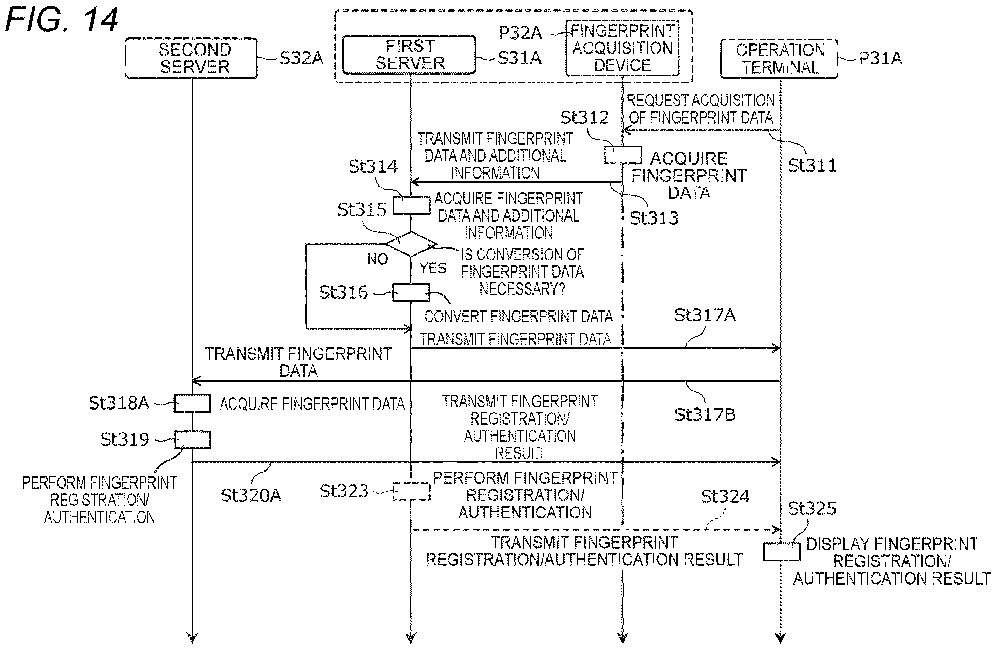

Next, an operation procedure example of the fingerprint authentication system 300B according to the sixth use case example will be described with reference to FIG. 14. FIG. 14 is a sequence diagram illustrating the operation procedure example of the fingerprint authentication system 300B according to the sixth use case example of Embodiment 3.

In the operation procedure example of the fingerprint authentication system 300B illustrated in FIG. 14, an example will be described in which the registration or biometric authentication of the fingerprint data performed by the first server S31A is not essential, but the present disclosure is not limited thereto. In the description of FIG. 14, the description of an example in which the conversion processing of the fingerprint data is not necessary is omitted. When the conversion processing of the fingerprint data is not necessary, the first server S31A or the second server S32A performs registration of the contact fingerprint data of the user or biometric authentication using the contact fingerprint data by using the unconverted fingerprint data (the contact fingerprint data or the non-contact fingerprint data).

In the operation procedure example of the fingerprint authentication system 300B illustrated in FIG. 14, the same processing as those in the operation procedure example of the fingerprint authentication system 300A are denoted by the same reference numerals, and the description thereof will be omitted.

The first server S31A associates the converted second contact fingerprint data with the control command requesting either registration or biometric authentication of the fingerprint data of the user, and transmits them to the operation terminal P31A (St317A).

The operation terminal P31A transmits the control command requesting the registration or the biometric authentication of the second contact fingerprint data transmitted from the first server S31A and the second contact fingerprint data to the second server S32 in association with each other based on the input operation by the person who acquires the fingerprint data (St317B). When the control command requests the registration of the second contact fingerprint data, the operation terminal P31A transmits the user information of the user to the second server S32A in association with the second contact fingerprint data.

The second server S32A acquires the control command and the second contact fingerprint data transmitted from the operation terminal P31A (St318A). Based on the control command, the second server S32A performs the registration processing of registering the second contact fingerprint data and the user information in the blacklist fingerprint database DB32 or the biometric authentication processing of collating at least one piece of fingerprint data registered in the blacklist fingerprint database DB32 with the second contact fingerprint data (St319). The second server S32A generates a registration result or a biometric authentication result of the acquired second contact fingerprint data and transmits the registration result or the biometric authentication result to the operation terminal P31A (St320A).

As described above, the first server S31A according to Embodiment 3 converts the fingerprint data acquired by the fingerprint acquisition device P32A into the contact fingerprint data that is collatable with the fingerprint data registered in each of the contact fingerprint database DB31 and the blacklist fingerprint database DB32 managed by different stores, facilities, or companies, so that it is possible to prevent a decrease in the authentication accuracy of the biometric authentication performed by each of the first server S31A and the second server S32A.

Accordingly, even when an administrator (a store, a company, a facility, or the like) who manages the contact fingerprint database DB31 and the first server S31A is different from an administrator (a store, a company, a facility, or the like) who manages the blacklist fingerprint database DB32 and the second server S32A and direct transmission and reception of fingerprint data or the like between the first server S31A and the second server S32A is not possible, the first server S31A can realize registration or biometric authentication of two or more pieces of fingerprint data by acquiring the fingerprint data once.

### <Seventh Use Case Example>

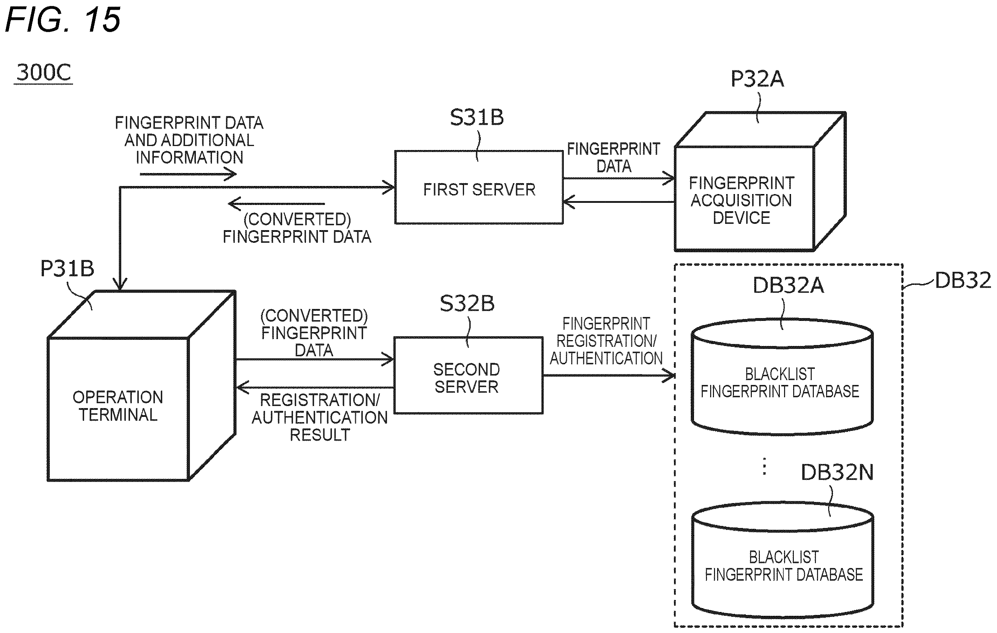

A seventh use case example corresponding to a fingerprint authentication system 300C according to Embodiment 3 will be described with reference to FIG. 15. Fig. 15 is a diagram illustrating the seventh use case example of the fingerprint authentication system 300C according to Embodiment 3. In the description of the seventh use case example, the same components as those of the sixth use case example are denoted by the same reference numerals, and the description thereof will be omitted.

The fingerprint authentication system 300C includes an operation terminal P31B, the fingerprint acquisition device P32A, the first server S31A, a second server S32B, and a blacklist fingerprint database DB32.

The fingerprint authentication system 300C in the seventh use case example acquires the fingerprint data (the contact fingerprint data or the non-contact fingerprint data) of the user by the fingerprint acquisition device P32A, and performs biometric authentication based on the fingerprint data stored in the blacklist fingerprint database DB32 and the fingerprint data acquired by the fingerprint acquisition device P32A.

The fingerprint acquisition device P32A in the seventh use case example is installed in, for example, an airport, a port, a station, or a train using biometric authentication. The fingerprint acquisition device P32A acquires the fingerprint data and transmits the acquired fingerprint data and the additional information corresponding to the fingerprint acquisition device P32A to the first server S31B in association with each other.

The first server S31B in the seventh use case example performs the conversion processing of the fingerprint data based on the control command transmitted from the operation terminal P31B. The first server S31B converts the acquired fingerprint data into the second contact fingerprint data that is collatable (biometrically authenticatable) with the contact fingerprint data registered in each of the blacklist fingerprint databases DB32A to DB32N managed by a store, a facility, or a company based on the additional information transmitted from the fingerprint acquisition device P32A, and transmits the second contact fingerprint data to the operation terminal P31B together with the non-contact fingerprint data before the conversion.

The operation terminal P31B in the seventh use case example acquires the second contact fingerprint data and the non-contact fingerprint data transmitted from the first server S31B and transmits (transfers) the data to the second server S32B. The operation terminal P31B acquires the registration result or the biometric authentication result of each piece of the fingerprint data transmitted from the second server S32B, and outputs and notifies the registration result or the biometric authentication result.

The second server S32B in the seventh use case example performs registration of the second contact fingerprint data or the non-contact fingerprint data transmitted from the operation terminal P31B. The second server S32B collates the second contact fingerprint data or the non-contact fingerprint data with the fingerprint data stored in each of the blacklist fingerprint databases DB32A to DB32N, and determines whether the user is a person registered in any of the blacklist fingerprint databases DB32A to DB32N. The second server S32B generates a registration result or a biometric authentication result of each piece of the fingerprint data and transmits the registration result or the biometric authentication result to the operation terminal P31B.

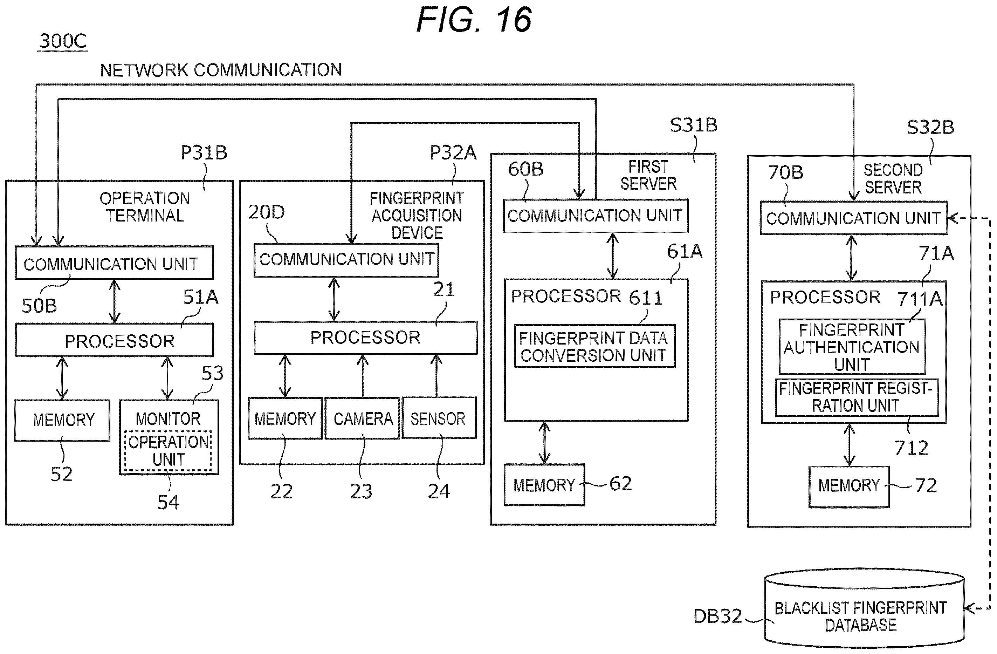

Next, an internal configuration example of the fingerprint authentication system 300C in the seventh use case example of Embodiment 3 will be described with reference to FIG. 16. FIG. 16 is a diagram illustrating the internal configuration example of the fingerprint authentication system 300C in the seventh use case example of Embodiment 3. In the following description of the seventh use case example, the same components as those of the sixth use case example are denoted by the same reference numerals, and the description thereof will be omitted.

The operation terminal P31B includes a communication unit 50B, the processor 51A, the memory 52, and the monitor 53.

The communication unit 50A is communicably connected to a communication unit 60B of the first server S31B and a communication unit 70B of the second server S32B via a network in a wireless or wired manner, and transmits and receives data.

The communication unit 50A transmits the control command generated by the processor 51A to the first server S31B. The communication unit 50A outputs the fingerprint data transmitted from the first server S31B to the processor 51A. The communication unit 50A outputs the registration result or the biometric authentication result of the fingerprint data transmitted from the second server S32B to the processor 51A.

The fingerprint acquisition device P32A includes a communication unit 20D, the processor 21, the memory 22, the camera 23, and the sensor 24. The fingerprint acquisition device P32A in the seventh use case example may include at least one of the camera 23 and the sensor 24.

The communication unit 20C is communicably connected to the communication unit 60B of the first server S31B via a network in a wireless or wired manner, and transmits and receives data. The communication unit 20C transmits the fingerprint data of the user generated by the processor 21 and the additional information to the first server S31B in association with each other.

The first server S31B includes the communication unit 60B, a processor 61A, and the memory 62.

The communication unit 60B is communicably connected to the operation terminal P31B and the fingerprint acquisition device P32A via a network in a wireless or wired manner, and transmits and receives data. The communication unit 60B acquires the control command transmitted from the operation terminal P31B, the fingerprint data (the contact fingerprint data or the non-contact fingerprint data), the user information, or the additional information transmitted from the fingerprint acquisition device P32A, and outputs them to the processor 61A. The communication unit 60B transmits the second contact fingerprint data or the non-contact data output from the processor 61A to the operation terminal P31B.

The processor 61A includes the fingerprint data conversion unit 611. The fingerprint data conversion unit 611 converts the fingerprint data transmitted from the fingerprint acquisition device P32A into the second contact fingerprint data.

The second server S32B includes the communication unit 70B, a processor 71A, and the memory 72. The second server S32B may be configured integrally with the blacklist fingerprint database DB32.

The communication unit 70B is communicably connected to the operation terminal P31B and the blacklist fingerprint database DB32 via a network in a wireless or wired manner, and transmits and receives data. The communication unit 70B acquires the control command, the fingerprint data, or the like from the operation terminal P31B and outputs them to the processor 71. The communication unit 70B transmits the registration result or the biometric authentication result of the fingerprint data output from the processor 71A to the operation terminal P31B.

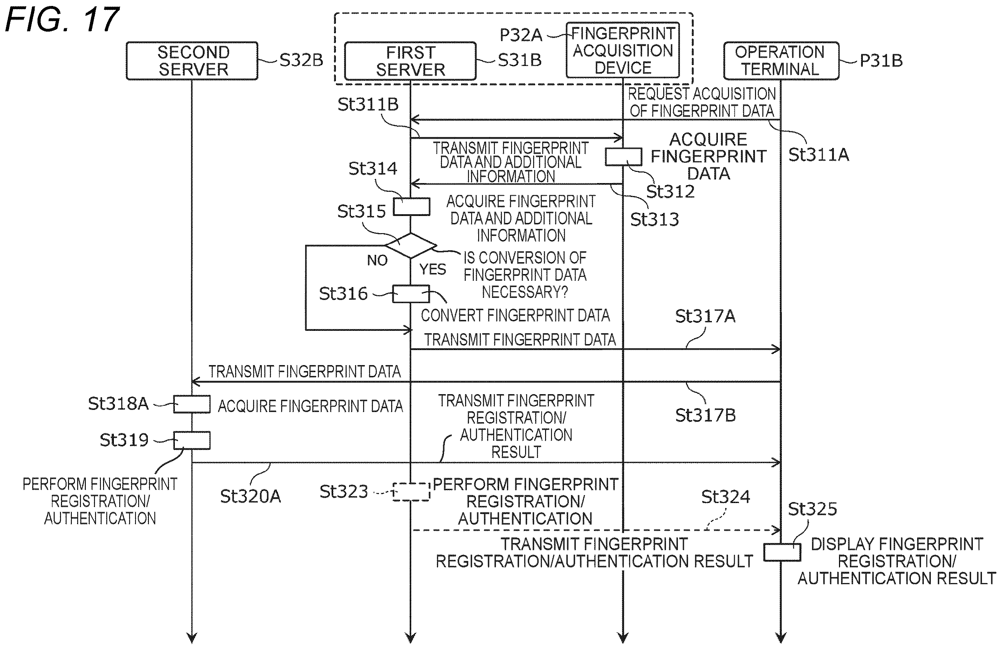

Next, an operation procedure example of the fingerprint authentication system 300C according to the seventh use case example will be described with reference to FIG. 17. FIG. 17 is a sequence diagram illustrating the operation procedure example of the fingerprint authentication system 300C according to the seventh use case example of Embodiment 3.

In the description of FIG. 14, the description of an example in which the conversion processing of the fingerprint data is not necessary is omitted. In the operation procedure example of the fingerprint authentication system 300C illustrated in FIG. 14, the same processing as those in the operation procedure example of the fingerprint authentication system 300B are denoted by the same reference numerals, and the description thereof will be omitted.

The operation terminal P31B generates the control command requesting acquisition of the fingerprint data of the user and transmits the control command to the first server S31B (St311A).

The first server S31B generates the control command requesting the fingerprint data and transmits the control command to the fingerprint acquisition device P32A (St311B).

As described above, the fingerprint authentication system 300C according to Embodiment 3 converts the fingerprint data acquired by the fingerprint acquisition device P32A into the contact fingerprint data that is collatable with the fingerprint data registered in each of the blacklist fingerprint databases DB32A to DB32N managed by a place, a facility, a company, or the like where the fingerprint acquisition device P32A is installed, so that it is possible to prevent a decrease in authentication accuracy with the fingerprint data registered in each database.

### (Embodiment 4)

The fingerprint authentication systems 300A to 300B according to Embodiment 3 have been described as an example in which the first servers S31, S31A convert the fingerprint data (the contact fingerprint data or the non-contact fingerprint data) acquired by the predetermined fingerprint acquisition device P32 into the first contact fingerprint data and the second contact fingerprint data used for biometric authentication performed by the first servers S31, S31A and the second servers S32, S32A, respectively. An example will be described in which a fingerprint authentication system 400 according to Embodiment 4 converts fingerprint data (the contact fingerprint data or the non-contact fingerprint data) acquired by any device into fingerprint data that is registrable or authenticatable in any database or any server.

In the following description of the fingerprint authentication system 400 according to Embodiment 4, the same components as those included in the fingerprint authentication systems 100A to 100C and 200, 300A to 300B according to Embodiment 1 to Embodiment 3 are denoted by the same reference numerals, and the description thereof will be omitted.

### <Eighth Use Case Example>

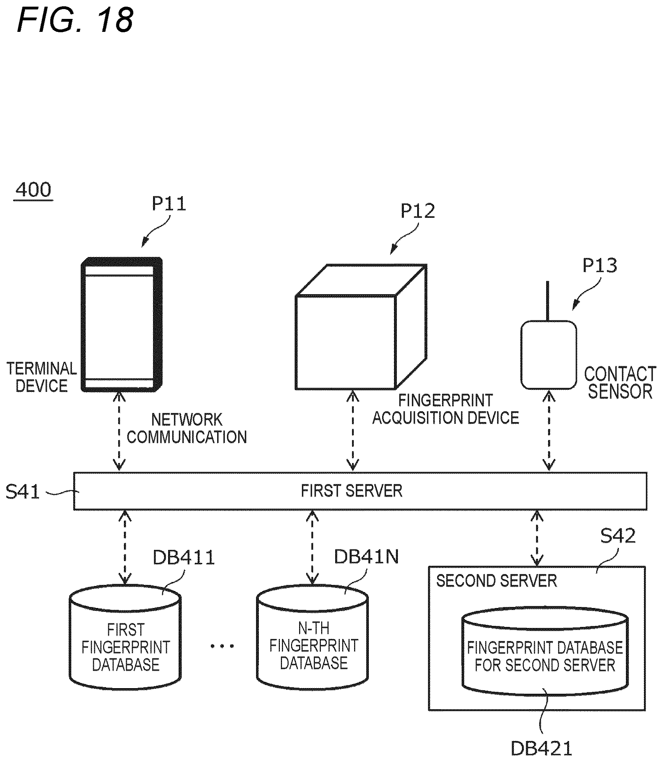

An eighth use case example corresponding to the fingerprint authentication system 400 according to Embodiment 4 will be described with reference to FIG. 18. Fig. 18 is a diagram illustrating the eighth use case example of the fingerprint authentication system 400 according to Embodiment 4. FIG. 18 illustrates an example in which a first server S41 is communicably connected to one second server S42, but the first server S41 may be communicably connected to a plurality of servers. The first server S41 may not directly perform fingerprint registration or authentication, and may be, for example, a data relay device that transfers fingerprint data to at least one computer capable of executing fingerprint registration or authentication.

The fingerprint authentication system 400 according to Embodiment 4 includes the terminal device P11, the fingerprint acquisition device P12, the contact sensor P13, the first server S41, a plurality of first fingerprint databases DB411 to an N-th fingerprint database DB41N, and the second server S42.

The fingerprint authentication system 400 transmits the fingerprint data (the contact fingerprint data or the non-contact fingerprint data) acquired by the terminal device P11, the fingerprint acquisition device P12, or the contact sensor P13 to the first server S41. The fingerprint authentication system 400 converts, by the first server S41, the acquired fingerprint data into the fingerprint data (the contact fingerprint data or the non-contact fingerprint data) that is registrable in the first fingerprint database DB411 to the N-th fingerprint database DB41N or a fingerprint database DB421 for a second server, or converts the acquired fingerprint data into the fingerprint data (the contact fingerprint data or the non-contact fingerprint data) that is collatable with the fingerprint data registered in the first fingerprint database DB411 to the N-th fingerprint database DB41N or the fingerprint database DB421 for a second server. The fingerprint authentication system 400 stores the converted fingerprint data in each of the first fingerprint database DB411 to the N-th fingerprint database DB41N and transmits the fingerprint data to the second server S42, by the first server S41.

In the fingerprint authentication system 400, the second server S42 registers the fingerprint data transmitted from the first server S41 in the fingerprint database DB421 for a second server, and collates (biometrically authenticates) the fingerprint data registered in the fingerprint database DB421 for a second server with the fingerprint data transmitted from the first server S41.

The terminal device P11 in the eighth use case example is substantially the same as the terminal device P11 illustrated in the first to third use case examples, and acquires the fingerprint data of the user in the contact state or the non-contact state and transmits the fingerprint data to the first server S41.

The fingerprint acquisition device P12 in the eighth use case example is substantially the same as the fingerprint acquisition device P12 illustrated in the first to third use case examples, acquires the fingerprint data of the user in the contact state or the non-contact state, and transmits the fingerprint data to the first server S41.

The contact sensor P13 in the eighth use case example is substantially the same as the fingerprint acquisition device P12 illustrated in the first to third use case examples, and acquires the fingerprint data of the user in the contact state and transmits the fingerprint data to the first server S41. The contact sensor P13 in the eighth use case example may or may not be capable of acquiring the contact fingerprint data that does not require the conversion processing of fingerprint data.

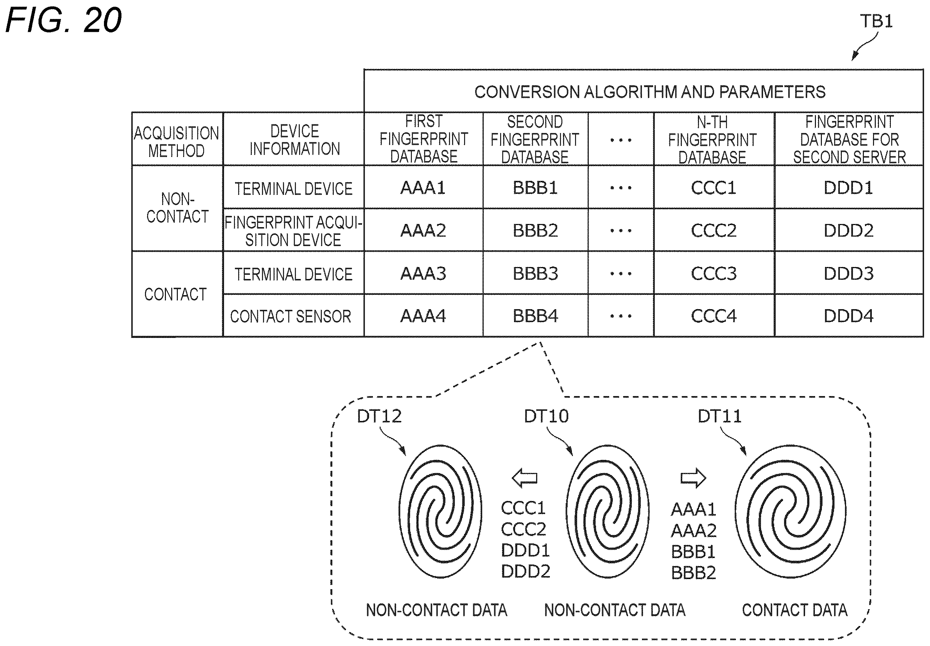

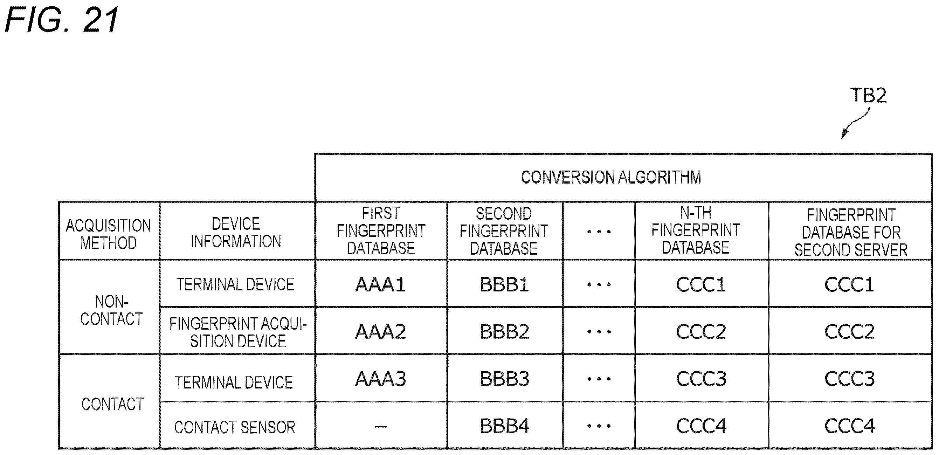

The first server S41 acquires the fingerprint data (the contact fingerprint data or the non-contact fingerprint data) acquired by the terminal device P11, the fingerprint acquisition device P12, or the contact sensor P13. Based on the additional information associated with the fingerprint data, the first server S41 refers to a conversion table (for example, a first conversion table TB1 illustrated in FIG. 20 or a second conversion table TB2 illustrated in FIG. 21) including information on various conversion methods for converting the fingerprint data into fingerprint data that is registrable in each database (that is, the first fingerprint database DB411 to the N-th fingerprint database DB41N and the fingerprint database DB421 for a second server) or is collatable with the fingerprint data registered in each database, corresponding to the additional information, and selects a conversion method for converting the acquired fingerprint data into fingerprint data that is registrable in each database or is collatable with each database.

The first server S41 converts the acquired fingerprint data based on each of the selected conversion methods, and transmits the converted fingerprint data to each database and the second server S42.

Each of the first fingerprint database DB411 to the N-th fingerprint database DB41N is connected to the first server S31 so as to be able to transmit and receive data. Each of the first fingerprint database DB411 to the N-th fingerprint database DB41N is used in, for example, a store, a facility, a company, or the like, and permits the first server S41 to write (store or register) the fingerprint data of at least one user. Each of the first fingerprint database DB411 to the N-th fingerprint database DB41N permits an external device (not illustrated) to refer to (read) the stored fingerprint data in biometric authentication.

The second server S42 registers the fingerprint data transmitted from the first server S41 in the fingerprint database DB421 for a second server, and collates (biometrically authenticates) the fingerprint data transmitted from the first server S41 with the fingerprint data registered in the fingerprint database DB421 for a second server.

The fingerprint database DB421 for a second server is connected to the second server S42 so as to be able to transmit and receive data, and permits storage (registration or writing) of the fingerprint data of at least one user by the second server S42 and reference (reading) of the fingerprint data by the second server S42 when biometric authentication is performed.

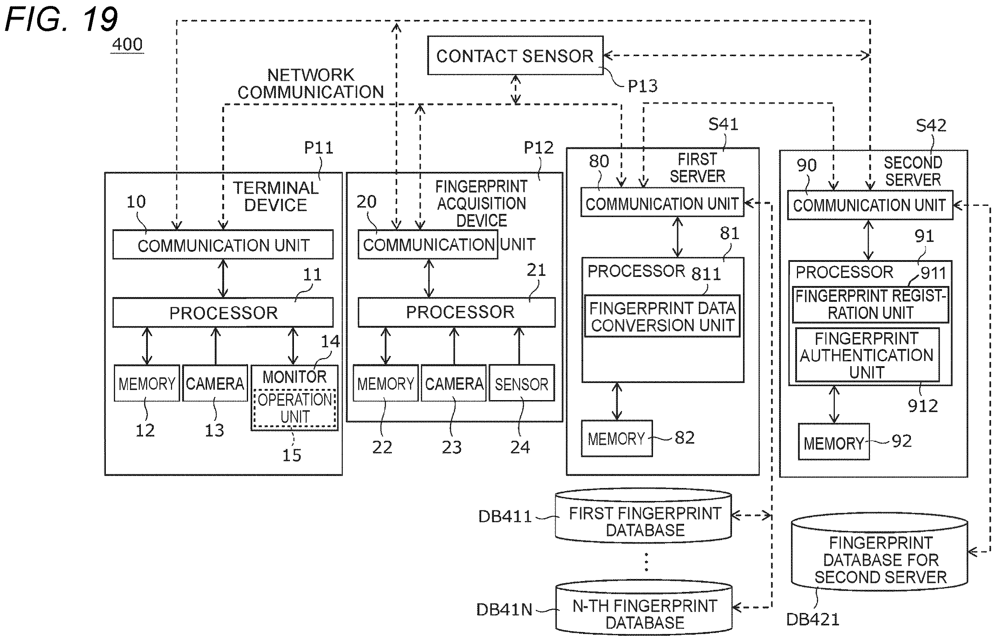

Next, an internal configuration of the fingerprint authentication system 400 in the eighth use case example of Embodiment 4 will be described with reference to FIG. 19. FIG. 19 is a diagram illustrating the internal configuration example of the fingerprint authentication system 400 in the eighth use case example of Embodiment 4.

Since the terminal device P11, the fingerprint acquisition device P12, and the contact sensor P13 illustrated in FIG. 19 have the same configurations as the terminal device P11, the fingerprint acquisition device P12, and the contact sensor P13 described in FIG. 10, respectively, the description thereof will be omitted.

The first server S41 includes a communication unit 80, a processor 81, and a memory 82.

The communication unit 80 is communicably connected to each of the terminal device P11, the fingerprint acquisition device P12, the contact sensor P13, the first fingerprint database DB411 to the N-th fingerprint database DB41N, and the second server S42 via a network in a wireless or wired manner, and transmits and receives data.

The communication unit 80 acquires the fingerprint data (the contact fingerprint data or the non-contact fingerprint data) from each of the terminal device P11, the fingerprint acquisition device P12, and the contact sensor P13, and outputs the acquired fingerprint data to the processor 81.

The processor 81 is implemented by, for example, a CPU, a FPGA, or a GPU and performs various types of processing and controls in cooperation with the memory 82. Specifically, the processor 81 realizes functions of each unit by referring to a program and data stored in the memory 82 and executing the program. Note that the function of each unit described here is a function realized by a fingerprint data conversion unit 811 or the like, and is, for example, a function of converting the fingerprint data of the user (specifically, the non-contact fingerprint data or the contact fingerprint data) into the fingerprint data corresponding to each database, a function of registering the converted fingerprint data in each database, or the like.

The fingerprint data conversion unit 811 determines whether the conversion of the fingerprint data is necessary based on the additional information transmitted from the terminal device P11, the fingerprint acquisition device P12, or the contact sensor P13. When it is determined that the conversion of the fingerprint data is necessary, the fingerprint data conversion unit 811 selects the conversion method of the fingerprint data corresponding to each database that requires the conversion of the fingerprint data when registering the fingerprint data based on the conversion table recorded in the memory 82 and the additional information.

The fingerprint data conversion unit 811 converts the fingerprint data (the contact fingerprint data or the non-contact fingerprint data) into fingerprint data corresponding to each database based on the selected conversion method. The fingerprint data conversion unit 811 outputs the converted fingerprint data or the unconverted fingerprint data, the user information, and the device information that is an acquisition source of the fingerprint data to the communication unit 80 in association with each other, and causes the communication unit 80 to transmit the fingerprint data, the user information, and the device information to each database and the second server S42.

The memory 82 includes, for example, a RAM as a work memory used when each processing of the processor 81 is performed, and a ROM that stores a program and data defining an operation of the processor 81. The RAM temporarily stores data or information generated or acquired by the processor 81. The program that defines the operation of the processor 81 is written into the ROM. The memory 82 records the conversion table.

Each of the first fingerprint database DB411 to the N-th fingerprint database DB41N is a so-called storage, and is implemented by a storage medium such as a flash memory, an HDD, or an SSD. Each of the first fingerprint database DB411 to the N-th fingerprint database DB41N stores (registers) and manages the fingerprint data and the user information transmitted from the first server S41 for each user. Each of the first fingerprint database DB411 to the N-th fingerprint database DB41N may further register the finger information corresponding to the fingerprint data in association therewith.

The second server S42 includes a communication unit 90, a processor 91, and a memory 92.

The communication unit 90 is communicably connected to each of the terminal device P11, the fingerprint acquisition device P12, the contact sensor P13, and the first server S41 via a network in a wireless or wired manner, and transmits and receives data.

The communication unit 90 acquires the fingerprint data, the user information, the device information, and the like transmitted from the first server S41, and outputs them to the processor 91. The communication unit 90 transmits the registration result or the biometric authentication result of the fingerprint data output from the processor 91 to the terminal device P11, the fingerprint acquisition device P12, or the contact sensor P13 corresponding to the device information associated with the fingerprint data.

The processor 91 is implemented by, for example, a CPU, a FPGA, or a GPU and performs various types of processing and controls in cooperation with the memory 92. Specifically, the processor 91 realizes functions of each unit by referring to a program and data stored in the memory 92 and executing the program. The function of each unit described here is a function realized by the fingerprint registration unit 911, the fingerprint authentication unit 912, and the like, and is, for example, a function of registering the fingerprint data in the fingerprint database DB421 for a second server, a function of collating (biometrically authenticating) the fingerprint data registered in the fingerprint database DB421 for a second server with the fingerprint data acquired from the first server S41, and the like.

The fingerprint registration unit 911 determines whether fingerprint data having the same user information as the user information associated with the converted fingerprint data transmitted from the first server S41 is already registered in the fingerprint database DB421 for a second server.

When it is determined that the fingerprint data is not registered, the fingerprint registration unit 911 stores (registers) the converted fingerprint data transmitted from the first server S41 and the user information in the fingerprint database DB421 for a second server in association with each other, and generates a registration result indicating that the registration is successful. When it is determined that the fingerprint data is already registered, the fingerprint registration unit 911 omits storing (registering) the fingerprint data in the fingerprint database DB421 for a second server and generates a registration result indicating that the registration is unsuccessful. The fingerprint registration unit 911 generates the registration result, outputs the registration result to the communication unit 90, and transmits the registration result to the corresponding device.

The fingerprint authentication unit 912 performs biometric authentication by collating the converted fingerprint data transmitted from the first server S41 with each piece of the fingerprint data registered in the fingerprint database DB421 for a second server. The fingerprint authentication unit 912 generates a biometric authentication result, outputs the biometric authentication result to the communication unit 90, and transmits the biometric authentication result to the corresponding device.

The memory 92 includes, for example, a RAM as a work memory used when each processing of the processor 91 is performed, and a ROM that stores a program and data defining an operation of the processor 91. The RAM temporarily stores data or information generated or acquired by the processor 91. The program that defines the operation of the processor 91 is written into the ROM.

The fingerprint database DB421 for a second server is a so-called storage, and is implemented by a storage medium such as a flash memory, an HDD, or an SSD. The fingerprint database DB421 for a second server stores (registers) and manages the fingerprint data and the user information transmitted from the second server S42 for each user. The fingerprint database DB421 for a second server may register the finger information corresponding to the fingerprint data in association with the fingerprint data.

Next, the first conversion table TB1 will be described with reference to FIG. 20. FIG. 20 is a diagram illustrating an example of the first conversion table TB1. The first conversion table TB1 illustrated in FIG. 20 is an example and is not limited thereto.

The first conversion table TB1 stores the information on a conversion method for converting the fingerprint data acquired by any device (the terminal device P11, the fingerprint acquisition device P12, or the contact sensor P13) by any acquisition method into the fingerprint data that is registrable in each database (the first fingerprint database DB411 to the N-th fingerprint database DB41N, and the fingerprint database DB421 for a second server) that stores the fingerprint data used for biometric authentication, or is collatable (biometrically authenticatable) with the fingerprint data registered in each database.

The first conversion table TB1 is recorded in the memory 82 and referred to by the first server S41. The first conversion table TB1 illustrated in FIG. 20 includes, for example, an "acquisition method" indicating whether the fingerprint data is acquired in the contact state or the non-contact state, the "device information" of the device from which the fingerprint data is acquired or generated, and a conversion method "a conversion algorithm and parameters" of the fingerprint data corresponding to each database.

For example, when the acquisition method for the fingerprint data is "non-contact" and the device from which the fingerprint data is acquired is the "terminal device", the fingerprint data conversion unit 811 of the first server S41 selects a conversion method "AAA1" of the fingerprint data corresponding to the first fingerprint database DB411, a conversion method "BBB1" of the fingerprint data corresponding to the second database (not illustrated), ..., a conversion method "CCC1" of the fingerprint data corresponding to the N-th fingerprint database DB41N, and a conversion method "DDD1" of the fingerprint data corresponding to the fingerprint database DB421 for a second server based on the additional information associated with the fingerprint data.

For example, when the acquisition method for the fingerprint data is "non-contact" and the device from which the fingerprint data is acquired is the "fingerprint acquisition device", the fingerprint data conversion unit 811 selects a conversion method "AAA2" of the fingerprint data corresponding to the first fingerprint database DB411, a conversion method "BBB2" of the fingerprint data corresponding to the second database (not illustrated), ..., a conversion method "CCC2" of the fingerprint data corresponding to the N-th fingerprint database DB41N, and a conversion method "DDD2" of the fingerprint data corresponding to the fingerprint database DB421 for a second server based on the additional information associated with the fingerprint data.

For example, when the acquisition method for the fingerprint data is "contact" and the device from which the fingerprint data is acquired is the "terminal device", the fingerprint data conversion unit 811 selects a conversion method "AAA3" of the fingerprint data corresponding to the first fingerprint database DB411, a conversion method "BBB3" of the fingerprint data corresponding to the second database (not illustrated), ..., a conversion method "CCC3" of the fingerprint data corresponding to the N-th fingerprint database DB41N, and a conversion method "DDD3" of the fingerprint data corresponding to the fingerprint database DB421 for a second server based on the additional information associated with the fingerprint data.

For example, when the acquisition method for the fingerprint data is "contact" and the device from which the fingerprint data is acquired is the "contact sensor", the fingerprint data conversion unit 811 selects a conversion method "AAA4" of the fingerprint data corresponding to the first fingerprint database DB411, a conversion method "BBB4" of the fingerprint data corresponding to the second database (not illustrated), ..., a conversion method "CCC4" of the fingerprint data corresponding to the N-th fingerprint database DB41N, and a conversion method "DDD4" of the fingerprint data corresponding to the fingerprint database DB421 for a second server based on the additional information associated with the fingerprint data.

Accordingly, the fingerprint data conversion unit 811 can convert the fingerprint data acquired by the terminal device P11, the fingerprint acquisition device P12, or the contact sensor P13 into the fingerprint data corresponding to each database.

For example, the fingerprint data conversion unit 811 performs conversion using the conversion methods "AAA1", "AAA2", "BBB1", and "BBB2" on non-contact fingerprint data DT10, and converts the non-contact fingerprint data DT10 into contact fingerprint data DT11 corresponding to the first fingerprint database DB411 and the second fingerprint database (not illustrated) which are transmission destinations of the fingerprint data. In addition, for example, the fingerprint data conversion unit 811 performs conversion using the conversion methods "CCC1", "CCC2", "DDD1", and "DDD2" on the non-contact fingerprint data DT10, and converts the non-contact fingerprint data DT10 into non-contact fingerprint data DT12 corresponding to the first fingerprint database DB411 and the second fingerprint database (not illustrated) which are transmission destinations of the fingerprint data.

Next, the second conversion table TB2 will be described with reference to FIG. 21. FIG. 21 is a diagram illustrating an example of the second conversion table TB2. The second conversion table TB2 illustrated in FIG. 21 is an example and is not limited thereto.

The second conversion table TB2 stores the information on a conversion method for converting the fingerprint data acquired by any device (the terminal device P11, the fingerprint acquisition device P12, or the contact sensor P13) by any acquisition method into the fingerprint data that is registrable in each database (the first fingerprint database DB411 to the N-th fingerprint database DB41N, and the fingerprint database DB421 for a second server) that stores the fingerprint data used for biometric authentication, or is collatable (biometrically authenticatable) with the fingerprint data registered in each database.

The second conversion table TB2 is recorded in the memory 82 and referred to by the first server S41. The second conversion table TB2 illustrated in FIG. 21 includes, for example, an "acquisition method" indicating whether the fingerprint data is acquired in the contact state or the non-contact state, the "device information" of the device from which the fingerprint data is acquired or generated, and a conversion method "a conversion algorithm" of the fingerprint data corresponding to each database.

In the example illustrated in FIG. 21, the N-th fingerprint database DB41N and the fingerprint database DB421 for a second server are managed (used) by different stores, companies, facilities, or the like, and store fingerprint data used for the same purpose (for example, settlement or entrance/exit management). In such a case, the conversion methods of the fingerprint data of the N-th fingerprint database DB41N and the fingerprint database DB421 for a second server stored in the second conversion table TB2 may be the same.

For example, when the acquisition method for the fingerprint data is "non-contact" and the device from which the fingerprint data is acquired is the "terminal device", the fingerprint data conversion unit 811 of the first server S41 selects a conversion method "AAA1" of the fingerprint data corresponding to the first fingerprint database DB411, a conversion method "BBB1" of the fingerprint data corresponding to the second database (not illustrated), ..., a conversion method "CCC1" of the fingerprint data corresponding to the N-th fingerprint database DB41N, and a conversion method "CCC1" of the fingerprint data corresponding to the fingerprint database DB421 for a second server based on the additional information associated with the fingerprint data.

For example, when the acquisition method for the fingerprint data is "non-contact" and the device from which the fingerprint data is acquired is the "fingerprint acquisition device", the fingerprint data conversion unit 811 selects a conversion method "AAA2" of the fingerprint data corresponding to the first fingerprint database DB411, a conversion method "BBB2" of the fingerprint data corresponding to the second database (not illustrated), ..., a conversion method "CCC2" of the fingerprint data corresponding to the N-th fingerprint database DB41N, and a conversion method "CCC2" of the fingerprint data corresponding to the fingerprint database DB421 for a second server based on the additional information associated with the fingerprint data.

For example, when the acquisition method for the fingerprint data is "contact" and the device from which the fingerprint data is acquired is the "terminal device", the fingerprint data conversion unit 811 selects a conversion method "AAA3" of the fingerprint data corresponding to the first fingerprint database DB411, a conversion method "BBB3" of the fingerprint data corresponding to the second database (not illustrated), ..., a conversion method "CCC3" of the fingerprint data corresponding to the N-th fingerprint database DB41N, and a conversion method "CCC3" of the fingerprint data corresponding to the fingerprint database DB421 for a second server based on the additional information associated with the fingerprint data.

For example, when the acquisition method for the fingerprint data is "contact" and the device from which the fingerprint data is acquired is the "contact sensor", the fingerprint data conversion unit 811 selects a conversion method "BBB4" of the fingerprint data corresponding to the second database (not illustrated), ..., a conversion method "CCC4" of the fingerprint data corresponding to the N-th fingerprint database DB41N, and a conversion method "CCC4" of the fingerprint data corresponding to the fingerprint database DB421 for a second server based on the additional information associated with the fingerprint data.

Accordingly, the fingerprint data conversion unit 811 can convert the fingerprint data acquired by the terminal device P11, the fingerprint acquisition device P12, or the contact sensor P13 into the fingerprint data corresponding to each database.

A conversion method "-" in the second conversion table TB2 indicates that the conversion of the fingerprint data is not necessary. For example, the fingerprint data for which the acquisition method for the fingerprint data is "contact" and which is acquired by the device of the "contact sensor" corresponds to the fingerprint data corresponding to the first fingerprint database DB411 even if the conversion processing is not performed. In such a case, when determining whether the conversion of the fingerprint data is necessary, the fingerprint data conversion unit 811 determines that the conversion of the fingerprint data is not necessary, or omits the conversion processing of the fingerprint data based on the conversion method "-" of the fingerprint data corresponding to the first fingerprint database DB411.

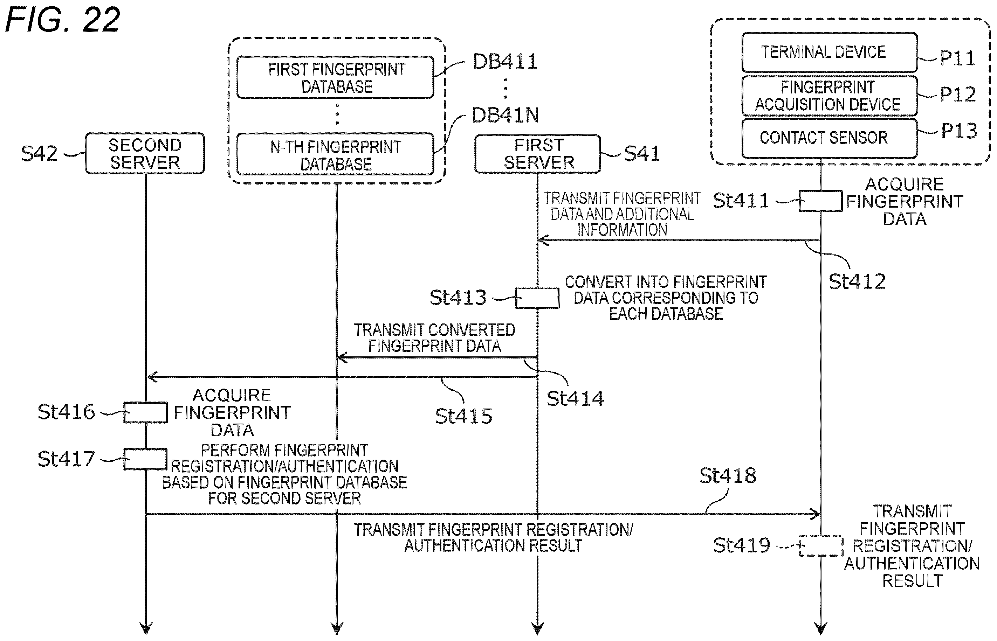

Next, an operation procedure example of the fingerprint authentication system 400 according to the eighth use case example will be described with reference to FIG. 22. FIG. 22 is a sequence diagram illustrating the operation procedure example of the fingerprint authentication system 400 according to the eighth use case example of Embodiment 4.

The terminal device P11, the fingerprint acquisition device P12, or the contact sensor P13 acquires the fingerprint data that is the contact fingerprint data or the non-contact fingerprint data (St411). The terminal device P11, the fingerprint acquisition device P12, or the contact sensor P13 generates the control command requesting either registration or biometric authentication of the fingerprint data, and transmits the generated control command, the additional information corresponding to the acquired fingerprint data and the fingerprint data to the first server S41 in association with each other (St412).

The first server S41 refers to the conversion table (for example, the first conversion table TB1 and the second conversion table TB2, and the like) recorded in the memory 82, and selects a conversion method for converting the acquired fingerprint data into fingerprint data corresponding to each database based on the additional information transmitted from the terminal device P11, the fingerprint acquisition device P12, or the contact sensor P13. The first server S41 converts the acquired fingerprint data into the fingerprint data corresponding to each database based on each selected conversion method (St413). When there is fingerprint data that does not require the conversion, the first server S41 omits the conversion processing.

The first server S41 transmits the converted fingerprint data to each of the first fingerprint database DB411 to the N-th fingerprint database DB41N to store (register) the fingerprint data (St414). Further, the first server S41 transmits, to the second server S42, the converted fingerprint data and the control command requesting either registration or biometric authentication of the fingerprint data in association with each other (St415).

The second server S42 acquires the fingerprint data transmitted from the first server S41 (St416). Based on the control command, the second server S42 performs the registration processing of registering the fingerprint data and the user information in the fingerprint database DB421 for a second server or the biometric authentication processing of collating at least one piece of fingerprint data registered in the fingerprint database DB421 for a second server with the acquired fingerprint data (St417). The second server S42 generates the registration result or the biometric authentication result of the acquired fingerprint data and transmits the registration result or the biometric authentication result to the terminal (the terminal device P11, the fingerprint acquisition device P12, or the contact sensor P13) that is an acquisition source (generation source) of the fingerprint data (St418).

The terminal device P11, the fingerprint acquisition device P12, or the contact sensor P13 outputs the registration result or the biometric authentication result of the fingerprint data transmitted from the second server S42 to a monitor, a speaker (not illustrated), an external device (not illustrated), or the like (St419).

As described above, the first server S41 in Embodiment 4 can convert the fingerprint data acquired by any device (the terminal device P11, the fingerprint acquisition device P12, or the contact sensor P13) by any acquisition method (for example, the contact state, the non-contact state, a sensor sensing method (the electrostatic capacitance method, the thermal method, the ultrasonic method, the pressure-sensitive method, the optical method, or the like), any specification of a camera or a sensor included in each device, or the like) into the fingerprint data that is collatable with the fingerprint data registered in each database. Accordingly, the first server S41 can prevent a decrease in the authentication accuracy of the biometric authentication performed using the fingerprint data registered in each database.

Although various embodiments and various use case examples have been described above, the embodiments and the use case examples may be freely combined.

As described above, the servers S11, S21 or the first servers S31, S31A, S31B, and S41 (an example of the biometric data conversion device) according to Embodiments 1 to 4 includes the communication units 30, 40, 60, 60A, and 80 (an example of the acquisition unit) configured to acquire at least one piece of first fingerprint data (an example of the first biometric data) and the processors 31, 41, 61, 61A, and 81 (an example of the control unit) configured to convert the first fingerprint data into second fingerprint data (an example of the second biometric data) different from the first fingerprint data and output the second fingerprint data.

Accordingly, the servers S11, S21 or the first servers S31, S31A, S31B, and S41 according to Embodiments 1 to 4 can convert the fingerprint data acquired by any device (the terminal device P11, the fingerprint acquisition device P12, or the contact sensor P13) by any acquisition method (for example, the contact state, the non-contact state, the sensor sensing method (the electrostatic capacitance method, the thermal method, the ultrasonic method, the pressure-sensitive method, the optical method, or the like), any specification of a camera or a sensor included in each device, or the like) into the fingerprint data that is collatable with the fingerprint data registered in at least one database. Therefore, the servers S11, S21 or the first servers S31, S31A, S31B, and S41 according to Embodiments 1 to 4 can convert the fingerprint data acquired by any acquisition method into the fingerprint data that is biometrically authenticatable.

The processor 61A in the first server S31B according to Embodiment 3 outputs the first fingerprint data and the converted second fingerprint data in association with each other. As a result, the first server S31B according to Embodiment 3 can output the fingerprint data (the first fingerprint data and the second fingerprint data) that is collatable with the fingerprint data managed by a store, a facility, or a company and acquired by any acquisition method by outputting the first fingerprint data and the converted second fingerprint data in association with each other.

The processors 31, 41, 61, and 81 in the servers S11, S21 or the first servers S31, S31A, and S41 according to Embodiments 1 to 4 determine whether the first fingerprint data is fingerprint data that is collatable with the fingerprint data (an example of registered fingerprint data) registered in a first database (for example, the contact fingerprint databases DB11, DB22, and DB31, the first fingerprint database DB411 to the N-th fingerprint database DB41N, the blacklist fingerprint databases DB21, DB32, the fingerprint database DB421 for a second server, or the like), output the first fingerprint data without converting the first fingerprint data when it is determined that the first fingerprint data is the fingerprint data that is collatable with the registered fingerprint data, and convert the first fingerprint data into the second fingerprint data and output the second fingerprint data when it is determined that the first fingerprint data is not the fingerprint data that is collatable with the fingerprint data (the registered fingerprint data). Accordingly, the servers S11, S21 or the first servers S31, S31A, and S41 according to Embodiments 1 to 4 can perform the conversion on only the fingerprint data that requires the conversion processing.

The processors 31, 41, 61, and 81 in the servers S11, S21 or the first servers S31, S31A, and S41 according to Embodiments 1 to 4 collate the fingerprint data (registered fingerprint data) recorded in the first database with the second fingerprint data and authenticates a person (user) corresponding to the second fingerprint data. As a result, the servers S11, S21 or the first servers S31, S31A, and S41 according to Embodiments 1 to 4 can perform the conversion processing of converting the fingerprint data acquired by any acquisition method into the fingerprint data that is biometrically authenticatable and the biometric authentication processing using the converted fingerprint data.

The processor 41 in the server S21 according to Embodiment 2 collates the fingerprint data (the registered fingerprint data) of at least one person who is a detection target registered in the second database (for example, the blacklist fingerprint database DB21) with the second fingerprint data, generates and outputs an alert indicating that the person is detected when it is determined that the second fingerprint data is fingerprint data that is the same as or similar to the fingerprint data (the registered fingerprint data), and outputs and registers the second fingerprint data in a third database (the contact fingerprint database DB22) different from the second database when it is determined that the second fingerprint data is not the fingerprint data that is the same as or similar to the fingerprint data (the registered fingerprint data). As a result, the server S21 according to Embodiment 2 can convert the fingerprint data acquired by any acquisition method into the fingerprint data that is biometrically authenticatable, and can use the converted fingerprint data for detection of a person registered in a blacklist and registration in the contact fingerprint database DB22.

The processor 41 in the server S21 according to Embodiment 2 collates the fingerprint data (the registered fingerprint data) of at least one person who is a detection target registered in the second database (for example, the blacklist fingerprint database DB21) with the second fingerprint data, generates and outputs an alert indicating that the person is detected when it is determined that the second fingerprint data is fingerprint data that is the same as or similar to the fingerprint data (the registered fingerprint data), and collates fingerprint data (the registered fingerprint data) of at least one person registered in a third database (the contact fingerprint database DB22) different from the second database with the second biometric data when it is determined that the second fingerprint data is not the fingerprint data that is the same as or similar to the fingerprint data (the registered fingerprint data). As a result, the server S21 according to Embodiment 2 can convert the fingerprint data acquired by any acquisition method into the fingerprint data that is biometrically authenticatable, and can use the converted fingerprint data for detection of a person registered in the blacklist and authentication with the fingerprint data of the person registered in the contact fingerprint database DB22.

The communication units 30, 40, 60, 60A and 80 in the servers S11, S21 or the first servers S31, S31A, and S41 according to Embodiments 1 to 4 acquire the first fingerprint data and the additional information on a device (an example of the acquisition device) from which the first fingerprint data is acquired. The processors 31, 41, 61, and 81 convert the first fingerprint data into the second fingerprint data based on the additional information. Accordingly, the servers S11, S21 or the first servers S31, S31A, and S41 according to Embodiments 1 to 4 can convert the fingerprint data acquired by any device into the fingerprint data more suitable for the biometric authentication registered in each database.

The communication units 30, 40, 60, 60A and 80 in the servers S11, S21 or the first servers S31, S31A, and S41 according to Embodiments 1 to 4 acquire the first fingerprint data and the additional information (an example of acquisition information) indicating whether the first fingerprint data is acquired in a contact state or a non-contact state. The processors 31, 41, 61, and 81 convert the first fingerprint data into the second fingerprint data based on the additional information. Accordingly, the servers S11, S21 or the first servers S31, S31A, and S41 according to Embodiments 1 to 4 can convert the fingerprint data acquired by any acquisition method into the fingerprint data more suitable for biometric authentication with the fingerprint data registered in each database.

The processors 61,81 in the first servers S31, S31A, and S41 according to Embodiment 3 and Embodiment 4 convert the first fingerprint data into N pieces of fingerprint data that are different from the first fingerprint data and collatable with fingerprint data (registered fingerprint data) registered in respective one of a plurality of different N (N is an integer of 2 or more) databases (the first fingerprint database DB411 to the N-th fingerprint database DB41N), and outputs the N pieces of fingerprint data. Accordingly, the first servers S31, S31A, and S41 according to Embodiment 3 and Embodiment 4 can convert one piece of fingerprint data acquired by any acquisition method into N pieces of fingerprint data that are collatable with the fingerprint data registered in respective one of the first fingerprint database DB411 to the N-th fingerprint database DB41N.

As described above, each of the fingerprint authentication systems 100A to 100C, 200, 300A to 300B, and 400 according to Embodiments 1 to 4 includes at least one device (an example of a biometric data acquisition device, for example, the terminal device P11, the fingerprint acquisition devices P12, P32, and P32A, the contact sensor P13, or the like) configured to acquire first fingerprint data (an example of first biometric data) and a server (for example, the servers S11, S21 or the first servers S31, S31A, and S41) configured to communicate with the device. The device acquires the first fingerprint data and transmits the first fingerprint data to the server. The server converts the first fingerprint data into second fingerprint data (an example of second biometric data) different from the first fingerprint data, and outputs the second fingerprint data.

Accordingly, each of the fingerprint authentication systems 100A to 100C, 200, 300A to 300B, and 400 according to Embodiments 1 to 4 can convert the fingerprint data acquired by any device (the terminal device P11, the fingerprint acquisition device P12, or the contact sensor P13) by any acquisition method (for example, the contact state, the non-contact state, the sensor sensing method (the electrostatic capacitance method, the thermal method, the ultrasonic method, the pressure-sensitive method, the optical method, or the like), any specification of a camera or a sensor included in each device, or the like) into the fingerprint data that is collatable with the fingerprint data registered in at least one database. Therefore, the servers S11, S21 or the first servers S31, S31A, and S41 according to Embodiments 1 to 4 can convert the fingerprint data acquired by any acquisition method into the fingerprint data that is biometrically authenticatable.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiments described above may be combined freely in a range without departing from the spirit of the invention.

The present application is based on a Japanese patent application filed on February 9, 2023 (Japanese Patent Application No. 2023-018583), and the contents thereof are incorporated herein by reference.

### INDUSTRIAL APPLICABILITY

The present disclosure is useful as a presentation of a biometric data conversion device, a biometric data conversion method, and a biometric data conversion system that convert biometric information acquired by any acquisition method into biometric information that is biometrically authenticatable.

### REFERENCE SIGNS LIST

10, 10A, 20, 20A, 20B, 20C, 30, 40, 50, 60, 60A, 70, 70A, 80, 90 communication unit
11, 21, 31, 41, 51, 61, 71, 81, 91 processor
12, 22, 32, 42, 52, 62, 72, 82, 92 memory
13, 23 camera
14, 53 monitor
15, 54 operation unit
24 sensor
100A, 100B, 100C, 200, 300A, 300B, 400 fingerprint authentication system
311, 411, 611, 811 fingerprint data conversion unit
312, 412, 612, 711, 912 fingerprint authentication unit
911 fingerprint registration unit
DB11, DB22, DB31 contact fingerprint database
DB21, DB32 blacklist fingerprint database
DB411 first fingerprint database
DB41N N-th fingerprint database
DB421 fingerprint database for second server
P11 terminal device
P12, P32, P32A fingerprint acquisition device
P13 contact sensor
S11, S21 server
S31, S31A, S41 first server
S32, S32A, S42 second server
TB1 first conversion table
TB2 second conversion table

## Claims

1. A biometric data conversion device comprising:
an acquisition unit configured to acquire at least one piece of first biometric data; and
a control unit configured to convert the first biometric data into second biometric data different from the first biometric data and output the second biometric data.

2. The biometric data conversion device according to claim 1, wherein
the control unit outputs the first biometric data and the converted second biometric data in association with each other.

3. The biometric data conversion device according to claim 1, wherein
the control unit
determines whether the first biometric data is biometric data that is collatable with registered biometric data registered in a first database,
outputs the first biometric data without converting the first fingerprint data when it is determined that the first biometric data is the biometric data that is collatable with the registered biometric data, and
converts the first biometric data into the second biometric data and outputs the second biometric data, when it is determined that the first biometric data is not the biometric data that is collatable with the registered biometric data.

4. The biometric data conversion device according to claim 3, wherein
the control unit collates the registered biometric data recorded in the first database with the second biometric data, and authenticates a person corresponding to the second biometric data.

5. The biometric data conversion device according to claim 4, wherein
the control unit
collates registered biometric data of at least one person who is a detection target registered in a second database with the second biometric data,
generates and outputs an alert indicating that the person is detected when it is determined that the second biometric data is biometric data that is same as or similar to the registered biometric data, and
outputs and registers the second biometric data in a third database different from the second database when it is determined that the second biometric data is not the biometric data that is the same as or similar to the registered biometric data.

6. The biometric data conversion device according to claim 4, wherein
the control unit
collates registered biometric data of at least one person who is a detection target registered in a second database with the second biometric data,
generates and outputs an alert indicating that the person is detected when it is determined that the second biometric data is biometric data that is same as or similar to the registered biometric data, and
collates registered biometric data of at least one person registered in a third database different from the second database with the second biometric data when it is determined that the second biometric data is not the biometric data that is the same as or similar to the registered biometric data.

7. The biometric data conversion device according to claim 1, wherein
the acquisition unit acquires the first biometric data and information on an acquisition device from which the first biometric data is acquired, and
the control unit converts the first biometric data into the second biometric data based on the information on the acquisition device.

8. The biometric data conversion device according to claim 1, wherein
the acquisition unit acquires the first biometric data and acquisition information indicating whether the first biometric data is acquired in a contact state or a non-contact state, and
the control unit converts the first biometric data into the second biometric data based on the acquisition information.

9. The biometric data conversion device according to claim 1, wherein
the control unit converts the first biometric data into N pieces of biometric data that are different from the first biometric data and collatable with registered biometric data registered in respective one of a plurality of different N (N is an integer of 2 or more) databases, and outputs the N pieces of biometric data.

10. A biometric data conversion method performed by a biometric data conversion device configured to communicate with at least one biometric data acquisition device configured to acquire first biometric data, the biometric data conversion method comprising:
acquiring the first biometric data; and
converting the first biometric data into second biometric data different from the first biometric data, and outputting the second biometric data.

11. A biometric data conversion system comprising:
at least one biometric data acquisition device configured to acquire first biometric data; and
a server configured to communicate with the biometric data acquisition device, wherein
the biometric data acquisition device acquires the first biometric data and transmits the first biometric data to the server, and
the server converts the first biometric data into second biometric data different from the first biometric data and outputs the second biometric data.
